# EUROPÄISCHE PATENTSCHRIFT

(11) **EP 2 997 321 B1**
(45) Veröffentlichungstag und Bekanntmachung des Hinweises auf die Patenterteilung: **28.12.2016**
(21) Anmeldenummer: 14720914.2
(22) Anmeldetag: 08.04.2014
(51) Int. Cl.: F27B 7/16, C01B 31/08

(54) **DREHROHR UND DREHROHROFEN ZUR HERSTELLUNG VON AKTIVKOHLE**
BURNER PIPE AND ROTARY KILN FOR PRODUCING ACTIVATED CARBON
TUBE ROTATIF ET FOUR TUBULAIRE ROTATIF SERVANT À PRODUIRE DU CHARBON ACTIF

(30) Priorität: 17.05.2013 DE 102013008412; 14.06.2013 DE 102013009961
(43) Veröffentlichungstag der Anmeldung: 23.03.2016
(73) Patentinhaber: Blücher GmbH, 40699 Erkrath (DE)
(72) Erfinder: GIEBELHAUSEN, Jann-Michael, 14712 Rathenow (DE); FICHTNER, Sven, 14727 Premnitz (DE); SCHRAGE, Christian, 40699 Erkrath (DE)
(74) Vertreter: Strehlke, Ingo Kurt
(86) Internationale Anmeldenummer: PCT/EP2014/057056
(87) Internationale Veröffentlichungsnummer: WO 2014/183927

(56) Entgegenhaltungen:
- WO-A2-03/027590
- DE-A1-102004 036 109

## Beschreibung

Die vorliegende Erfindung betrifft ein Drehrohr für einen Drehrohrofen gemäß dem Oberbegriff von Anspruch 1 und einen Drehrohrofen mit einem solchen Drehrohr. Des Weiteren betrifft die vorliegende Erfindung die Verwendung eines solchen Drehrohrs bzw. Drehrohrofens zur Herstellung von Aktivkohle.

Aktivkohle ist aufgrund ihrer recht unspezifischen adsorptiven Eigenschaften das am meisten angewandte Adsorbens. Gesetzliche Auflagen, aber auch das steigende Bewusstsein der Verantwortung für die Umwelt führen zu einem steigenden Bedarf an Aktivkohle.

Dabei wird Aktivkohle zunehmend sowohl im zivilen wie auch im militärischen Bereich angewendet. Im zivilen Bereich kommt Aktivkohle beispielsweise für die Aufreinigung von Gasen, Filteranlagen für die Klimatisierung und Autofiltern zur Anwendung, während Aktivkohle im militärischen Bereich beispielsweise Verwendung in Schutzmaterialien aller Art findet (z. B. Atemschutzmasken, Schutzabdeckungen und Schutzbekleidungsstücken aller Art, wie z. B. Schutzanzügen).

Aktivkohle wird im Allgemeinen durch Sulfonierung, Carbonisierung (synonym auch als Schwelung, Pyrolyse oder Verkokung bezeichnet) und nachfolgende Aktivierung geeigneter kohlenstoffhaltiger Ausgangsmaterialien erhalten. Dabei werden solche Ausgangsmaterialien bevorzugt, die zu ökonomisch vernünftigen Ausbeuten führen. Denn durch Abspalten flüchtiger Bestandteile bei der Carbonisierung und durch den Abbrand beim Aktivieren kommt es zu erheblichen Gewichtsverlusten. Für weitere Einzelheiten zur Herstellung von Aktivkohle kann beispielsweise verwiesen werden auf die Veröffentlichung H. v. Kienle und E. Bäder "Aktivkohle und ihre industrielle Anwendung", Enke Verlag Stuttgart, 1980.

Die Beschaffenheit der erzeugten Aktivkohle - fein- oder grobporig, fest oder brüchig etc. - hängt vom kohlenstoffhaltigen Ausgangsmaterial ab. Übliche Ausgangsmaterialien sind beispielsweise Kokosnussschalen, Holzabfälle, Torf, Steinkohle, Peche, aber auch besondere Kunststoffe, wie z. B. Polymere, die unter anderem bei der Herstellung von Aktivkohle in Form von Körnchen oder Kügelchen eine große Rolle spielen.

Aktivkohle wird in verschiedenen Formen verwendet: Pulverkohle, Splitterkohle, Formkohle und seit Ende der 1970er Jahre auch korn- und kugelförmige Aktivkohle (sogenannte "Kornkohle" bzw. "Kugelkohle"). Kornförmige, insbesondere kugelförmige Aktivkohle hat gegenüber den anderen Formen von Aktivkohle eine Reihe von Vorteilen, die sie für bestimmte Applikationen wertvoll oder sogar unverzichtbar macht: Sie ist rieselfähig, enorm abriebfest, staubfrei und sehr hart. Kornkohle, insbesondere Kugelkohle, ist wegen ihrer speziellen Form, aber auch wegen der extrem hohen Abriebfestigkeit für besondere Einsatzgebiete, so z. B. Flächenfiltermaterialien für Schutzanzüge gegen chemische Gifte oder Filter für niedrige Schadstoffkonzentrationen in großen Luftmengen, sehr gefragt.

Bei der Herstellung von Aktivkohle, insbesondere Kornkohle und Kugelkohle, wird in den meisten Fällen von geeigneten Polymeren ausgegangen. Bevorzugt kommen Polymere, insbesondere divinylbenzolvernetze Styrolpolymere, zum Einsatz. Als geeignetes Ausgangsmaterial dienen z. B. die Vorstufen von Ionenaustauscherharzen (d. h. unsulfonierte Ionenaustauscherharze), bei denen es sich zumeist um divinylbenzolvernetzte Polystyrolharze handelt. Dieses Ausgangsmaterial wird dann typischerweise in situ in Gegenwart von Schwefelsäure bzw. Oleum sulfoniert.

Es können aber auch Ionenaustauscherharze (z. B. Kationenaustauscherharze bzw. saure Ionenaustauscherharze, vorzugsweise mit Sulfonsäuregruppen, so z. B. Kationenaustauscherharze auf Basis sulfonierter Styrol/Divinylbenzol-Copolymere) zum Einsatz kommen. Bei diesem Ausgangsmaterial erfolgt anschließend keine Sulfonierung.

Die Sulfonierung ist eine Reaktion, bei der eine Sulfonsäuregruppe oder auch Sulfogruppe in eine organische Verbindung eingeführt wird. Die Reaktionsprodukte werden als Sulfonsäuren bezeichnet. Im Falle fertiger Ionenaustauscher sind die Sulfonsäuregruppen bereits im Material vorhanden, während diese im Falle der Ionenaustauschervorstufen noch durch Sulfonierung eingeführt werden müssen. Die Sulfonsäuregruppen spielen eine entscheidende Funktion, da ihnen die Rolle eines Vernetzers zukommt, indem sie bei der Carbonisierung abgespalten werden. Nachteilig und problematisch sind aber insbesondere die großen Mengen an freigesetztem Schwefeldioxid sowie die damit unter anderem verbundenen Korrosionsprobleme in den Herstellapparaturen.

Üblicherweise erfolgt die Herstellung von Aktivkohle in Drehrohröfen. Diese weisen beispielsweise eine Einlassöffnung zum Befüllen mit einem Beladungsgut und zum Einführen von Gasen sowie eine Auslassöffnung zur Entnahme des Endprodukts und zum Auslassen von Gasen auf. Die Herstellung von Aktivkohle in Drehrohröfen kann in einem kontinuierlichen oder diskontinuierlichen Prozess erfolgen.

Bei der Carbonisierung, welcher eine Phase der Vorcarbonisierung bzw. Vorschwelung vorangehen kann, erfolgt die Umwandlung des kohlenstoffhaltigen Ausgangsmaterials zu Kohlenstoff, d. h. mit anderen Worten wird das Ausgangsmaterial verkohlt. Bei der Carbonisierung der zuvor genannten organischen Polymere auf Basis von Styrol und Divinylbenzol werden - unter Abspaltung flüchtiger Bestandteile, wie insbesondere SO₂ - die funktionellen chemischen Gruppen, insbesondere Sulfonsäuregruppen, zerstört, und es bilden sich freie Radikale, die eine starke Vernetzung bewirken - ohne die es keinen Pyrolyserückstand (=Kohlenstoff) gäbe. Die organischen Polymere enthalten vernetzende funktionelle chemische Gruppen (insbesondere Sulfonsäuregruppen), welche bei ihrer thermischen Zersetzung zu freien Radikalen und somit zu Vernetzungen führen.

Im Allgemeinen wird die Carbonisierung unter inerter Atmosphäre (z. B. Stickstoff) oder allenfalls leicht oxidierender Atmosphäre durchgeführt. Gleichermaßen kann es vorteilhaft sein, während der Carbonisierung, insbesondere bei höheren Temperaturen (z. B. im Bereich von etwa 500°C bis 650°C), zu der Inertatmosphäre eine kleinere Menge an Sauerstoff, insbesondere in Form von Luft (z. B. 1 bis 5 %), zuzugeben, um eine Oxidation des carbonisierten Polymerskeletts zu bewirken und auf diese Weise die nachfolgende Aktivierung zu erleichtern.

Aufgrund der bei der Carbonisierung abgespaltenen sauren Reaktionsprodukte (z. B. SO₂) ist diese Stufe des Herstellungsprozesses der Aktivkohle in Bezug auf das Material des Drehrohrs bzw. Drehrohrofens extrem korrosiv und stellt höchste Ansprüche an die Korrosionsbeständigkeit des Materials des Drehrohrs bzw. Drehrohrofens.

Der Carbonisierung schließt sich dann die Aktivierung des carbonisierten Ausgangsmaterials an. Das Grundprinzip der Aktivierung besteht darin, einen Teil des bei der Carbonisierung generierten Kohlenstoffs selektiv und gezielt unter geeigneten Bedingungen abzubauen. Hierdurch entstehen zahlreiche Poren, Spalten und Risse und die auf die Masseneinheit bezogene Oberfläche der Aktivkohle nimmt erheblich zu. Bei der Aktivierung wird also ein gezielter Abbrand der Kohle vorgenommen. Da bei der Aktivierung Kohlenstoff abgebaut wird, tritt bei diesem Vorgang ein zum Teil erheblicher Substanzverlust ein, welcher unter optimalen Bedingungen gleichbedeutend mit einer Erhöhung der Porosität ist und eine Zunahme der inneren Oberfläche (Porenvolumen) der Aktivkohle bedeutet. Die Aktivierung erfolgt daher unter selektiv bzw. kontrolliert oxidierenden Bedingungen.

Übliche Aktivierungsgase sind im Allgemeinen Sauerstoff, insbesondere in Form von Luft, Wasserdampf und/oder Kohlendioxid sowie Gemische dieser Aktivierungsgase. Den Aktivierungsgasen können gegebenenfalls Inertgase (z. B. Stickstoff) zugesetzt werden. Um eine technisch ausreichend hohe Reaktionsgeschwindigkeit zu erzielen, wird die Aktivierung im Allgemeinen bei relativ hohen Temperaturen durchgeführt, insbesondere im Temperaturbereich von 700°C bis 1.200°C, vorzugsweise 800°C bis 1.100°C. Dies stellt hohe Anforderungen an die Temperaturbeständigkeit des Materials des Drehrohrs.

Die verschiedenen Prozessschritte, nämlich Sulfonierung, Carbonisierung und Aktivierung, stellen unterschiedliche, hohe Anforderungen an das Material des Drehrohrs. Insbesondere wenn alle drei Prozessschritte in diskontinuierlicher Weise in einem einzigen Drehrohr durchgeführt werden sollen, muss das Material des Drehrohrs
a) den stark ätzenden Bedingungen bei der Sulfonierung,
b) den sehr korrosiven Bedingungen bei der Carbonisierung und
c) den Hochtemperaturbedingungen bei der Aktivierung standhalten.

Daher kommen für die Herstellung des Drehrohrs nur solche Materialien zum Einsatz, welche eine gute Beständigkeit gegenüber chemisch aggressiven Materialien, insbesondere eine hohe Widerstandsfähigkeit gegen Säuren, eine gute Korrosionsbeständigkeit, sowie eine gute Hochtemperaturbeständigkeit in einem einzigen Material vereinen.

Eine weitere Anforderung an das Drehrohr ergibt sich aus dem Erfordernis eines homogenen Inkontaktbringens des Beladungsgutes, insbesondere der sulfonierten, carbonisierten Ausgangsmaterialien, mit den Aktivierungsgasen. Dazu sind Mittel für eine innige Durchmischung des Beladungsgutes vorzusehen. Ohne ausreichende Durchmischung des Beladungsgutes beim Drehen des Drehrohrs liegt ein wesentlicher Teil des Beladungsgutes beim Drehen des Drehrohrs an einer Innenseite des Drehrohrs an bzw. liegen die einzelnen Partikel des Beladungsgutes aufeinander und werden mitgedreht, bis sie schließlich nach unten fallen. Dadurch sind sowohl die Kontaktfläche als auch die Kontaktzeit des Beladungsgutes mit den Aktivierungsgasen sehr gering. Daraus resultiert qualitativ schlechtere Aktivkohle, nämlich eine Aktivkohle mit einem geringeren Aktivierungsgrad, insbesondere mit einer weniger porösen Struktur und geringeren inneren aktiven Oberfläche. Des Weiteren erhöht eine unzureichende Durchmischung des Beladungsgutes die erforderliche Zeit für die Herstellung der Aktivkohle, insbesondere die Aktivierungszeit.

Ein Drehrohr, dass den oben genannten Anforderungen genügt, zeigt die DE 10 2004 036 109 A1, von der die vorliegende Erfindung ausgeht. Das bekannte Drehrohr ist für einen Drehrohrofen vorgesehen und zur Herstellung von Aktivkohle mittels Sulfonierung, Carbonisierung und Aktivierung in einen diskontinuierlichen Prozess ausgebildet. Das Drehrohr weist einen Drehrohrkörper und mindestens ein Mischabschnitt zur Durchmischung eines Beladungsgutes auf.

Der Mischabschnitt des bekannten Drehrohrs weist mehrere Mischelemente mit Befestigungsabschnitten auf. Die Befestigungsabschnitte der Mischelemente werden durch Durchbrechungen im Drehrohrkörper gesteckt und auf einer Außenseite des Drehrohrkörpers verschweißt. Bei dem bekannten Drehrohr ist erkannt worden, dass innenseitig mit einer Innenseite des Drehrohrs verschweißte Mischelemente problematisch sind, da beim Verschweißen der Mischelemente eine Versprödung des Materials eintreten kann und da die während der Aktivkohleherstellung starken Beanspruchungen ausgesetzten Schweißnähte im Inneren des Drehrohres eine ständige Wartung und Überprüfung außerhalb des Betriebs des Drehrohrs erfordern.

Obwohl der Drehrohrkörper und die Mischelemente des bekannten Drehrohrs aus hochtemperatur- und korrosionsbeständigem, hochlegierten Stahl bestehen, kann es beim Drehen des bekannten Stahldrehrohrs durch das Gleiten des Beladungsgutes über die Innenseite des Drehrohrkörpers und über die Mischelemente zu einem Abrieb von Metallen aus dem hochlegierten Stahl kommen. Dieser Metallabrieb führt zur Verunreinigung der Aktivkohle. Dies zeigt sich z. B. an einem erhöhten Eisengehalt in der Aktivkohle.

Für Reinstanforderungen, beispielsweise im pharmazeutischen Bereich, wird allerdings Aktivkohle benötigt, die keinerlei derartige Verunreinigungen aufweist, insbesondere keine eisenhaltigen Verunreinigungen oder andere aus dem Stahl des Drehrohrs stammenden Metallspuren.

Die WO 03/027590 A2 betrifft ein Verfahren zum Trocknen von pharmazeutischen Granulaten, Pellets oder dergleichen, wobei das zu trocknende Gut einer rotierend angetriebenen, transparenten Förderröhre aufgegeben und mittels Mikrowelle erhitzt werden soll. Die Förderröhre soll gleichzeitig von einem Gas durchströmt werden, so dass die durch die Erhitzung des zu trockenen Gutes freiwerdende Feuchtigkeit abtransportiert wird. Insbesondere soll hierzu eine aus Quarzglas bestehende, umlaufend um eine achsparallele Achse angetriebene Förderröhre eingesetzt werden.

Aufgabe der vorliegenden Erfindung ist es, das bekannte Drehrohr bzw. den bekannten Drehrohrofen so weiterzubilden, dass bei der Herstellung von Aktivkohle Verunreinigungen, insbesondere Metallspuren, in der Aktivkohle vermieden bzw. minimiert und gleichzeitig hohe Durchsätze sowie hohe Aktivierungsgrade der Aktivkohle erreicht werden.

Die zuvor geschilderte Aufgabenstellung wird durch ein Drehrohr gemäß Anspruch 1 bzw. durch einen Drehrohrofen gemäß Anspruch 13 gelöst. Ausgestaltungen dieser Erfindungsaspekte sind Gegenstand der jeweiligen Unteransprüche.

Ein weiterer Gegenstand der vorliegenden Erfindung ist die Verwendung des erfindungsgemäßen Drehrohrs bzw. Drehrohrofens zur Herstellung von Aktivkohle, insbesondere mittels Sulfonierung, Carbonisierung und Aktivierung in einem diskontinuierlichen Prozess, gemäß Anspruch 15.

Es versteht sich von selbst, dass Ausgestaltungen, Ausführungsformen, Vorteile u. dgl., welche nachfolgend zu Zwecken der Vermeidung von Wiederholungen zu einem Erfindungsaspekt angeführt sind, in Bezug auf die übrigen Erfindungsaspekte entsprechend gelten.

Dies vorausgeschickt, wird im Folgenden die vorliegende Erfindung näher beschrieben.

Die vorliegende Erfindung betrifft ein Drehrohr für einen Drehrohrofen, ausgebildet zur Herstellung von Aktivkohle, insbesondere mittels Sulfonierung, Carbonisierung und Aktivierung polymerer Ausgangsmaterialien in einem diskontinuierlichen Prozess, mit einem Drehrohrkörper und mehreren Mischabschnitten mit mehreren Mischelementen zur Durchmischung eines Beladungsgutes, wobei der Drehrohrkörper und die Mischelemente zumindest im Wesentlichen aus Quarzglas bestehen, wobei das erfindungsgemäße Drehrohr dadurch gekennzeichnet ist,
dass die Mischelemente an einer Innenseite des Drehrohrkörpers befestigt und mit der Innenseite fest verbunden sind, wobei die Mischelemente fest und dauerhaft mit dem Drehrohrkörper verbunden sind und wobei die Mischelemente plattenförmig ausgebildet sind;
dass der Drehrohrkörper einen mittigen axialen Abschnitt mit einem ersten Innenquerschnitt, zwei äußere axiale Abschnitte mit jeweils einem zweiten Innenquerschnitt und zwei Übergangsabschnitte mit jeweils einem sich verjüngenden dritten Innenquerschnitt aufweist; und
dass das Drehrohr an einem oder beiden der äußeren axialen Abschnitte einen Rücklaufschutz und/oder Überlaufschutz für feste und/oder flüssige Materialien aufweist, wobei der Rücklaufschutz und/oder Überlaufschutz derart ausgebildet ist, dass einer oder beide der äußeren axialen Abschnitte in axialer Richtung jeweils mit seinem dem jeweiligen Übergangsabschnitt benachbarten Ende in den jeweiligen Übergangsabschnitt hineinragt.

Bei dem erfindungsgemäßen Drehrohr weisen die Mischabschnitte an einer Innenseite des Drehrohrkörpers befestigte und mit der Innenseite fest verbundene Mischelemente auf. Ein Mischabschnitt erstreckt sich über einen Bereich des Drehrohrs und unterscheidet sich von anderen Mischabschnitten hinsichtlich seiner Lage im Drehrohr und/oder seiner Ausgestaltung, z. B. der Anordnung im Drehrohr, der Anordnung zueinander, der Form und/oder der Größe jeweils des Mischelements oder der Mischelemente des Mischabschnitts. Mehrere Mischabschnitte müssen nicht separat sein, sondern können auch überlappen.

Die an der Innenseite des Drehrohrkörpers vorgesehenen Mischelemente sorgen für eine sehr gute Durchmischung des Beladungsgutes, was
- für einen vollständigen Ablauf der Reaktionen bei der Herstellung von Aktivkohle vorteilhaft ist,
- homogenere Prozessbedingungen für die einzelnen Partikel des Beladungsgutes bewirkt, also z. B. die Aufnahme eines zumindest im Wesentlichen gleichen Wärmestroms oder einer zumindest im Wesentlichen gleichen Wärmemenge,
- zu qualitativ hochwertiger Aktivkohle führt, nämlich zu einer Aktivkohle mit einer hochporösen Struktur, einer großen inneren aktiven Oberfläche und somit einem hohen Aktivierungsgrad,
- die erforderliche Zeit für die Herstellung der Aktivkohle reduziert, da insbesondere die Aktivierungsphase verkürzt wird und
- hohe Durchsätze pro Zeiteinheit erlaubt.

Insbesondere wenn alle drei Prozessschritte (Sulfonierung, Carbonisierung und Aktivierung) in einem diskontinuierlichen Prozess in einem einzigen Drehrohr durchgeführt werden sollen, muss das Material des Mischelements sowie des Drehrohrkörpers sowohl den stark ätzenden Bedingungen bei der Sulfonierung, den sehr korrosiven Bedingungen bei der Carbonisierung als auch den Hochtemperaturbedingungen bei der Aktivierung standhalten. Erfindungsgemäß ist nun vorgesehen, dass der Drehrohrkörper und die Mischelemente zumindest im Wesentlichen aus Quarzglas bestehen.

Quarzglas ist ein Material, das eine gute Beständigkeit gegenüber chemisch aggressiven Materialien, insbesondere eine hohe Widerstandsfähigkeit gegen Säuren, eine gute Korrosionsbeständigkeit, eine hohe Erweichungstemperatur und Temperaturbeständigkeit sowie eine niedrige thermische Ausdehnung bei hoher Temperaturwechselbeständigkeit gewährleistet.

Quarzglas kommt in der Natur vor, kann aber auch synthetisch hergestellt werden (z. B. mittels Flammenhydrolyse). Quarzglas ist die reinste Form von Siliziumdioxid (SiO₂) und dementsprechend die wertvollste und am höchsten entwickelte Glasvarietät.

Zu den bedeutendsten Eigenschaften von Quarzglas, insbesondere synthetischem Quarzglas, gehört die hohe chemische Reinheit. Fremdstoffe treten nur als Spuren auf. So beträgt z. B. der Eisengehalt von synthetischem Quarzglas typischerweise weniger als 0,1 ppm.

Durch die Verwendung von Quarzglas statt Stahl für den Drehrohrkörper und die Mischelemente werden Verunreinigungen der Aktivkohle durch Metallspuren vermieden bzw. erheblich reduziert. Dies liegt zum einen an der hohen chemischen Reinheit von Quarzglas. Zum anderen ist ein Abrieb der ohnehin wenigen vorhandenen Metallspuren aus dem Quarzglas aufgrund dessen sehr glatter Oberfläche deutlich erschwert und letztlich vernachlässigbar.

Gleichzeitig stellt die Verwendung von Quarzglas hohe Anforderungen an Design und Fertigung des Drehrohrs. Aufgrund der sehr glatten Oberfläche von Quarzglas gleitet das Beladungsgut noch stärker an der Innenseite des Drehrohrkörpers als bei Verwendung von Stahl. Dies erschwert grundsätzlich eine gute Durchmischung des Beladungsgutes und stellt somit hohe Anforderungen an die Realisierung des Mischabschnitts, insbesondere des Mischelements bzw. der Mischelemente.

Insbesondere wenn alle drei Prozessschritte (Sulfonierung, Carbonisierung und Aktivierung) in einem diskontinuierlichen Prozess in einem einzigen Drehrohr durchgeführt werden sollen, ist die Verwendung eines Drehrohrs mit einem Drehrohrkörper aus Quarzglas ohne wenigstens einen Mischabschnitt, insbesondere ohne ein Mischelement, problematisch, da sonst keine ausreichende Durchmischung pro Zeiteinheit erreicht wird und somit der Durchsatz bei der Aktivkohleherstellung und der Aktivierungsgrad der Aktivkohle zu gering wären.

Grundsätzlich wäre es möglich, Mischabschnitte durch ins Innere des Drehrohrkörpers ragende Vertiefungen bzw. Dellen oder Einbuchtungen im Drehrohrkörper vorzusehen. Derartige von der Außenseite des Drehrohrkörpers einzubringende Vertiefungen würden zwar gegenüber einer glatten Innenfläche die Durchmischung verbessern, allerdings würde hierbei noch immer kein hinreichender Durchmischungsgrad erreicht.

Theoretisch wäre es auch möglich, im Drehrohrkörper Schlitze zur Aufnahme von Mischelementen vorzusehen, wie es im Stand der Technik bei Stahldrehrohrkörpern beschrieben ist. Allerdings ist die Befestigung eines Mischelements an der Außenseite des Drehrohrkörpers - wie bei dem bekannten Drehrohr - bei Verwendung von Quarzglas als Material des Drehrohrkörpers und des Mischelements nicht möglich bzw. praktikabel, da dies sehr leicht zu Beschädigungen, insbesondere Rissen, im Quarzglas führen würde.

Bei dem erfindungsgemäßen Drehrohr ist nun ein neuer Weg beschritten worden, bei dem abweichend vom Stand der Technik die Mischelemente an der Innenseite des Drehrohrkörpers befestigt und mit der Innenseite fest verbunden werden.

Im Zusammenhang mit der Erfindung ist festgestellt worden, dass das Befestigen bzw. Anbringen der aus Quarzglas bestehenden Mischelemente an der Innenseite des ebenfalls aus Quarzglas bestehenden Drehrohrkörpers eine große Herausforderung darstellt. Zunächst war man der Ansicht, dass ein Befestigen von Mischelementen aus Quarzglas an der Innenseite des Drehrohrkörpers aus Quarzglas nicht möglich bzw. nicht praktikabel sei. Vor dem Zustandekommen der Erfindung hielt man das erfindungsgemäße Drehrohr für technisch nicht ausführbar. Man war der Auffassung, dass Mischelemente, die an der Innenseite des Drehrohrkörpers befestigt und mit der Innenseite fest verbunden sind, zu Spannungen und schließlich zu Beschädigungen, insbesondere Rissen, in dem die Befestigungsstellen umgebenden Quarzglas des Drehrohrkörpers führen. Bei durchgeführten Versuchen, bei denen alle Mischelemente gleichzeitig an der Innenseite des Drehrohrkörpers befestigt und mit der Innenseite fest verbunden worden sind, sind die vorgenannten Beschädigungen auch tatsächlich aufgetreten.

Überraschenderweise ist dann allerding festgestellt worden, dass die vorgenannten Probleme dann nicht auftreten, wenn das Mischelement bzw. die Mischelemente einzeln oder in Gruppen thermisch an der Innenseite des Drehrohrkörpers mittels eines Bindemittels befestigt und einzeln oder in Gruppen mit der Innenseite fest verbunden werden. Das Bindemittel dient auch zur Vorpositionierung der einzelnen Mischelemente an der Innenseite des Drehrohrkörpers. Die Mischelemente sind mit der Innenseite des Drehrohrkörpers mit Hilfe des Bindemittels durch spannungsarmes Glühen verbunden, insbesondere verschmolzen. Der Kontaktbereich zwischen dem jeweiligen Mischelement und der Innenseite des Drehrohrkörpers ist derart nachgetempert, dass eventuell vorhandene Spannungen in dem Quarzglas eliminiert bzw. reduziert sind. Das Nachtempern kann bis zu einem Tag pro Mischelement in Anspruch nehmen.

Diese Art der Herstellung ist zwar sehr zeitaufwendig und damit kostenintensiv, ermöglicht aber erstmals ein Drehrohr mit Drehrohrkörper und Mischelementen aus Quarzglas, mit dem Verunreinigungen der Aktivkohle, insbesondere durch Metallspuren, vermieden bzw. minimiert werden, wobei gleichzeitig eine sehr gute Durchmischung des Beladungsgutes, hohe Durchsätzen und hohe Aktivierungsgrade der hergestellten Aktivkohle erreicht werden.

Mit dem erfindungsgemäßen Drehrohr lässt sich somit qualitativ hochwertige Aktivkohle herstellen, die Reinstanforderungen, beispielsweise im pharmazeutischen Bereich, genügt.

Gleichzeitig weist das erfindungsgemäße Drehrohr eine hohe Temperaturbeständigkeit auf, die insbesondere für die Aktivierung von Vorteil ist. Außerdem hält das erfindungsgemäße Drehrohr sehr korrosiven Bedingungen der Carbonisierung stand. Ferner weist das erfindungsgemäße Drehrohr eine hohe Widerstandsfähigkeit gegenüber einem breiten Spektrum an Elementen und Verbindungen, insbesondere Säuren, ganz besonders Schwefelsäure, auf.

Somit lässt sich in einem einzigen erfindungsgemäßen Drehrohr Aktivkohle mittels Sulfonierung, Carbonisierung und Aktivierung in einem diskontinuierlichen Prozess herstellen. Dies vermeidet ein Umladen des Beladungsgutes und die Herstellung und/oder Benutzung mehrerer Drehrohre.

Außerdem reduziert das erfindungsgemäße Drehrohr die erforderliche Herstellungszeit und somit auch die Herstellungskosten. Ferner ermöglicht das erfindungsgemäße Drehrohr eine Verminderung des Ausschusses.

Unter dem Begriff "Drehrohr" ist im Sinne der vorliegenden Erfindung ein zumindest im Wesentlichen horizontal ausgerichtetes, rotationssymmetrisches Rohr zu verstehen, welches drehbar gelagert ist. Der Innenquerschnitt des Drehrohrs muss in axialer Richtung, also in Richtung der Rotationsachse, weder gleichförmig noch kreisförmig sein.

Der Begriff "Beladungsgut" bezeichnet erfindungsgemäß die sich im Drehrohr befindlichen, in dem jeweiligen Prozessschritt zu verarbeitenden Materialien, insbesondere das polymere Ausgangsmaterial, Schwefelsäure, sulfonierte Polymere, carbonisierte sulfonierte Polymere, Aktivierungsgase sowie die aktivierte Aktivkohle.

Die genannten Aspekte und Merkmale der vorliegenden Erfindung sowie die sich aus der weiteren Beschreibung und den Ansprüchen ergebenen Aspekte und Merkmale der Erfindung können unabhängig voneinander, aber auch in beliebiger Kombination realisiert werden.

Weitere Vorteile, Merkmale und Aspekte der vorliegenden Erfindung ergeben sich aus den Ansprüchen und der folgenden Beschreibungen bevorzugter Ausführungsformen anhand der Zeichnung.

In der Zeichnung zeigt
- Fig. 1: schematisch eine Draufsicht einer ersten bevorzugten Ausführungsform des erfindungsgemäßen Drehrohrs,
- Fig. 2: schematisch einen Schnitt durch das Drehrohr aus Fig. 1 entlang der Schnittlinie II/II aus Fig. 1,
- Fig. 3: schematisch eine perspektivische Ansicht des Drehrohrs aus Fig. 1, wobei ein Teil des Drehrohrs aufgeschnitten ist,
- Fig. 4: schematisch einen Schnitt durch das Drehrohr aus Fig. 1 entlang der Schnittlinie IV/IV aus Fig. 2,
- Fig. 5: schematisch einen Schnitt durch das Drehrohr aus Fig. 1 entlang der Schnittlinie V/V aus Fig. 2 und
- Fig. 6: schematisch eine perspektivische Ansicht einer zweiten bevorzugten Ausführungsform des erfindungsgemäßen Drehrohrs, wobei ein Teil des Drehrohrs aufgeschnitten ist.

In den Figuren werden für gleiche oder ähnliche Teile dieselben Bezugszeichen verwendet, wobei entsprechende Eigenschaften und Vorteile erreicht werden, auch wenn eine wiederholte Beschreibung weggelassen ist.

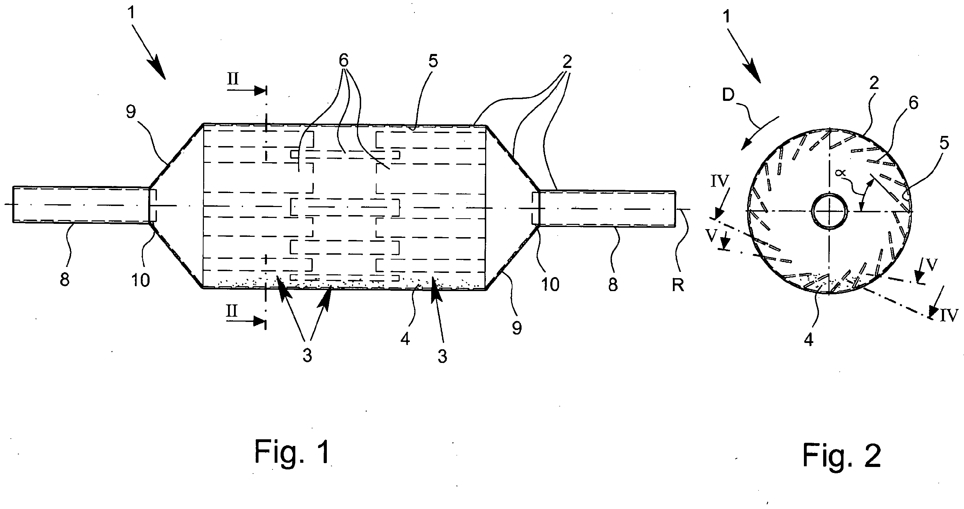

Fig. 1 zeigt schematisch eine Draufsicht oder Vorderansicht einer ersten bevorzugten Ausführungsform eines erfindungsgemäßen Drehrohrs 1 für einen (nicht dargestellten) Drehrohrofen. Dieser umfasst grundsätzlich eine das Drehrohr 1 bzw. dessen Reaktorteil zumindest teilweise umgebende Heizeinrichtung. Insbesondere kann der Reaktorteil in oder über einer schalenförmigen Heizeinrichtung angeordnet sein.
Das Drehrohr 1 ist rotationssymmetrisch um eine Rotationsachse R, die hier die axiale Richtung vorgibt.

Das Drehrohr 1 ist zur Herstellung von Aktivkohle in einem dreistufigen Prozess ausgebildet, und zwar bei der ersten bevorzugten Ausführungsform zur Sulfonierung, Carbonisierung und Aktivierung polymerer Ausgangsmaterialien in einem diskontinuierlichen Prozess. Als polymere Ausgangsmaterialien kommen Vorstufen von Ionenaustauscherharzen (d. h. unsulfonierte Ionenaustauscherharze) zum Einsatz, insbesondere divinylbenzolvernetzte Polystyrolharze.

Grundsätzlich weist das Drehrohr 1 einen Drehrohrkörper 2 und Mischabschnitte 3 zur Durchmischung eines Beladungsgutes 4 auf und die Mischabschnitte 3 weisen an einer Innenseite 5 des Drehrohrkörpers 2 befestigte und mit der Innenseite 5 fest verbundene Mischelemente 6 auf.

Die erste bevorzugte Ausführungsform des erfindungsgemäßen Drehrohrs 1 weist drei Mischabschnitte 3 mit mehreren, vorzugsweise 30 Mischelementen 6 auf. In Fig. 1 sind die Mischelemente 6 gestrichelt dargestellt.

Erfindungsgemäß bestehen der Drehrohrkörper 2 und die Mischelemente 6 zumindest im Wesentlichen aus Quarzglas.

Das Drehrohr 1 erlaubt die Herstellung von Aktivkohle unter Vermeidung bzw. Minimierung von Verunreinigungen der Aktivkohle, insbesondere durch Metallspuren, wobei gleichzeitig eine sehr gute Durchmischung des Beladungsgutes 4, hohe Durchsätze, ein geringer Ausschuss und hohe Aktivierungsgrade der hergestellten Aktivkohle erreicht werden. Mit dem Drehrohr 1 lässt sich somit qualitativ hochwertige Aktivkohle herstellen, die Reinstanforderungen, beispielsweise im pharmazeutischen Bereich, genügt.

Ferner weist das Drehrohr 1 eine hohe Temperaturbeständigkeit auf und hält den sehr korrosiven Bedingungen der Carbonisierung stand. Außerdem weist das Drehrohr 1 eine hohe Widerstandsfähigkeit gegenüber einem breiten Spektrum an Elementen und Verbindungen, insbesondere Säuren, ganz besonders Schwefelsäure, auf.

Das Drehrohr 1 ermöglicht die Durchführung der Sulfonierung, Carbonisierung und Aktivierung in einem diskontinuierlichen Prozess in einer einzigen Apparatur.

Bei dem in Fig. 1 dargestellten und bevorzugten Ausführungsbeispiel sind die Mischelemente 6 an der Innenseite 5 des Drehrohrkörpers 2 mittels eines Bindemittels angebracht bzw. befestigt und vorpositioniert. Vorzugsweise sind die Mischelemente 6, das Bindemittel und der Drehrohrkörper 2 durch spannungsarmes Glühen und bevorzugt Nachtempern fest miteinander verbunden. Dabei ist jedes Mischelement 6 in einem separaten Schritt mit dem Drehrohrkörper 2 verbunden worden. Dadurch sind Spannungen in dem Kontaktbereich zwischen den einzelnen Mischelementen 6 und dem Drehrohrkörper 2 eliminiert bzw. minimiert: Dies führt zu einem sehr stabilen Drehrohr 1 und verhindert Beschädigungen, insbesondere Risse, im Drehrohr 1. Grundsätzlich kann aber auch eine Gruppe von z. B. zwei Mischelementen 6 gleichzeitig vorzugsweise an möglichst weit voneinander entfernten Positionen an der Innenseite 5 des Drehrohrkörpers 2 befestigt werden.

Bei dem in Fig. 1 dargestellten und bevorzugten Ausführungsbespiel sind die Mischelemente 6 fest bzw. dauerhaft, insbesondere stoffschlüssig, vorzugsweise durch Verschmelzen mit dem Drehrohrkörper 2 verbunden. Bei stoffschlüssigen Verbindungen werden die Verbindungspartner durch atomare oder molekulare Kräfte zusammengehalten. Dies führt zu einer stabilen Verbindung zwischen den Mischelementen 6 und dem Drehrohrkörper 2.

Vorzugsweise ist der Kontaktbereich zwischen dem Drehrohrkörper 2 und den Mischelementen 6 zumindest im Wesentlichen frei von Eigenspannungen. Dies führt zu einer erhöhten Stabilität der Mischelemente 6 und des Drehrohrkörpers 2 und verhindert Beschädigungen, insbesondere Risse, im Quarzglas. Der Begriff "Eigenspannungen", wie er im Rahmen der vorliegenden Erfindung verwendet wird, bezeichnet mechanische Spannungen, die in einem Körper herrschen, an dem keine äußeren Kräfte angreifen und der sich im thermischen Gleichgewicht befindet. Diese Eigenspannungsfreiheit ist dadurch erzielt worden, dass nicht gleichzeitig alle Mischelemente 6 an der Innenseite 5 des Drehrohrkörpers 2 fest verbunden worden sind. Dies erfolgte zumindest in zwei Schritten. Bevorzugt wird jedes Mischelement 6 separat mit der Innenseite 5 fest verbunden.

Grundsätzlich ist es bevorzugt, wenn die Mischelemente 6 derart ausgebildet und/oder angeordnet sind, dass das Beladungsgut 4 im Betrieb des Drehrohrs 1 zumindest im Wesentlichen in radialer Richtung bewegt bzw. durchmischt wird, insbesondere kein oder nur ein geringfügiger Transport des Beladungsgutes 4 in axialer Richtung stattfindet. Dann sammelt sich das Beladungsgut 4 während des Herstellungsprozesses nicht an einem Ende des Drehrohrs 1 an, sondern bleibt zumindest über einen wesentlichen Teil der Länge des Drehrohrs 1 verteilt und wird mit Hilfe der erfindungsgemäßen Mischelemente 6 sehr gut beim Drehen des Drehrohrs 1 durchmischt. Der Begriff "Länge" des Drehrohrs 1 bzw. des Drehrohrkörpers 2 bezeichnet dabei die Ausdehnung bzw. Erstreckung des Drehrohrs 1 bzw. des Drehrohrkörpers 2 in axialer Richtung.

Bei der in Fig. 1 dargestellten und erfindungsgemäßen Ausführung weist der Drehrohrkörper 2 einen mittigen axialen Abschnitt 7 mit einem ersten Innenquerschnitt, zwei äußere axiale Abschnitte 8 mit jeweils einem zweiten Innenquerschnitt und zwei Übergangsabschnitte 9 mit jeweils einem sich verjüngenden dritten Innenquerschnitt auf. Der mittige axiale Abschnitt 7 kann auch als Hauptreaktor und die äußeren axialen Abschnitt 8 als Halterohre bezeichnet werden. Vorzugsweise wird das Drehrohr 1 an den äußeren axialen Abschnitten 8 drehbar gelagert. Die Mischelemente 6 sind bevorzugt in dem mittigen axialen Abschnitt 7 angeordnet.

Bei dem in Fig. 1 dargestellten bevorzugten Ausführungsbeispiel sind der mittige axiale Abschnitt 7 und die beiden äußeren axialen Abschnitte 8 zylindrisch, nämlich jeweils als gerader Hohlzylinder ausgebildet. Die beiden Übergangsabschnitte 9 sind konus- bzw. kegelstumpfförmig ausgebildet.

Vorzugsweise ist/sind der erste Innenquerschnitt und/oder der zweite Innenquerschnitt zumindest im Wesentlichen gleichförmig über ihre gesamte Länge, und zwar kreisförmig. Bevorzugt ist der erste Innenquerschnitt des mittigen axialen Abschnitts 7 größer als der zweite Innenquerschnitt der beiden äußeren axialen Abschnitte 8. Bei dem in Fig. 1 dargestellten und bevorzugten Ausführungsbeispiel ist insbesondere der Innendurchmesser des mittigen axialen Abschnitts 7 größer als der Innendurchmesser der beiden äußeren axialen Abschnitte 8. Der mittige axiale Abschnitt 7 ist hier zwischen den beiden Übergangsabschnitten 9 und den beiden äußeren axialen Abschnitten 8 angeordnet. Ferner ist hier jeder Übergangsabschnitt 9 zwischen dem mittigen axialen Abschnitt 7 und jeweils einem der beiden äußeren axialen Abschnitte 8 angeordnet. Insofern stellen die beiden Übergangsabschnitte 9 jeweils ein Verbindungsglied zwischen dem mittigen axialen Abschnitt 7 und den äußeren axialen Abschnitten 8 dar. Dabei verjüngt sich die konus- bzw. kegelstumpfförmige Form der Übergangsabschnitte 9 von einem Innendurchmesser, der dem Innendurchmesser des mittigen axialen Abschnitts 7 entspricht, auf einen Innendurchmesser, der dem Innendurchmesser der beiden äußeren axialen Abschnitte 8 entspricht.

Hinsichtlich der Herstellung des Drehrohrs 1 wird vorzugsweise zunächst der mittige axiale Abschnitt 7 aus Quarzglas gezogen. Anschließend oder gleichzeitig werden die beiden äußeren axialen Abschnitte 8 aus Quarzglas gezogen. Dann werden die Mischelemente 6 hergestellt und anschließend, wie oben bereits beschreiben, einzeln oder in Gruppen thermisch an der Innenseite 5 des Drehrohrkörpers 2 mittels eines Bindemittels befestigt und dann einzeln oder in Gruppen nachgetempert. Anschließend werden die äußeren axialen Abschnitte 8 an der verjüngten Seite der Übergangsabschnitte 9 geklebt. Schließlich werden die Übergangsabschnitte 9 an ihrer nicht verjüngten Seite an den mittleren axialen Abschnitt 7 geklebt. Auch hierbei kann ein anschließendes Verschmelzen erfolgen.

Vorzugsweise weist der mittige axiale Abschnitt 7 einen Innendurchmesser von 200 mm bis 1.500 mm bevorzugt 220 mm bis 1.000 mm, weiter bevorzugt 250 mm bis 750 mm, besonders bevorzugt 260 mm bis 500 mm, insbesondere zumindest im Wesentlichen 300 mm auf.

Die Länge des mittigen axialen Abschnitts 7 beträgt vorzugsweise 30% bis 1.000%, bevorzugt 60% bis 500%, weiter bevorzugt 100% bis 300%, besonders bevorzugt 120% bis 200%, insbesondere zumindest im Wesentlichen 175% der Größe des Innendurchmessers des mittigen axialen Abschnitts 7. Absolut beträgt die Länge des mittigen axialen Abschnitts 7 vorzugsweise 100 mm bis 3.000 mm, bevorzugt 200 mm bis 2.000 mm, weiter bevorzugt 300 mm bis 1.000 mm, besonders bevorzugt 400 mm bis 700 mm, insbesondere zumindest im Wesentlichen 520 mm.

Vorzugsweise beträgt der Innendurchmesser der beiden äußeren axialen Abschnitte 8 jeweils 1% bis 75%, bevorzugt 5% bis 60%, weiter bevorzugt 10% bis 40%, besonders bevorzugt 15% bis 30%, insbesondere zumindest im Wesentlichen 20% der Größe des Innendurchmessers des mittigen axialen Abschnitts 7. Absolut beträgt der Innendurchmesser der beiden äußeren axialen Abschnitte 8 jeweils vorzugsweise 10 mm bis 200 mm, bevorzugt 20 mm bis 150 mm, weiter bevorzugt 30 mm bis 100 mm, besonders bevorzugt 40 mm bis 80 mm, insbesondere zumindest im Wesentlichen 65 mm.

Ferner beträgt die Länge der beiden äußeren axialen Abschnitte 8 vorzugsweise jeweils 10% bis 200%, bevorzugt 20% bis 150%, weiter bevorzugt 30% bis 100%, besonders bevorzugt 40% bis 75%, insbesondere zumindest im Wesentlichen 50% der Länge des mittigen axialen Abschnitts 7. Absolut beträgt die Länge der beiden äußeren axialen Abschnitte 8 vorzugsweise jeweils 50 mm bis 1.000 mm, bevorzugt 100 mm bis 750 mm, weiter bevorzugt 150 mm bis 500 mm, besonders bevorzugt 200 mm bis 300 mm, insbesondere zumindest im Wesentlichen 250 mm.

Die Länge der beiden Übergangsabschnitte 9 beträgt vorzugsweise jeweils 1% bis 100%, bevorzugt 2% bis 80%, weiter bevorzugt 5% bis 60%, besonders bevorzugt 10% bis 40%, insbesondere zumindest im Wesentlichen 20% der Länge des mittigen axialen Abschnitts 7. Absolut beträgt die Länge der beiden Übergansabschnitte 9 vorzugsweise 10 mm bis 500 mm, bevorzugt 25 mm bis 400 mm, weiter bevorzugt 50 mm bis 300 mm, besonders bevorzugt 75 mm bis 200 mm, insbesondere zumindest im Wesentlichen 100 mm.

Die Länge des Drehrohrs 1 beträgt vorzugsweise 120% bis 700%, bevorzugt 150% bis 500%, weiter bevorzugt 175% bis 400%, besonders bevorzugt 200% bis 300%, insbesondere zumindest im Wesentlichen 235% der Länge des mittigen axialen Abschnitts 7. Absolut beträgt die Länge des Drehrohrs 1 vorzugsweise 200 mm bis 6.000 mm, bevorzugt 500 mm bis 4.000 mm, weiter bevorzugt 1.000 mm bis 2.000 mm, insbesondere zumindest im Wesentlich 1220 mm.

Grundsätzlich hat es sich als vorteilhalft erwiesen, wenn das Drehrohr 1 an einem oder beiden der äußeren axialen Abschnitte 8 einen Rücklaufschutz und/oder Überlaufschutz für feste und/oder flüssige Materialien aufweist, die sich im mittigen axialen Abschnitt 7 befinden, insbesondere für die Schwefelsäure vor und/oder während der Sulfonierung. Der Rücklaufschutz bzw. Überlaufschutz, insbesondere Säurerücklaufschutz, schützt vor einem Rücklauf bzw. Überlauf des Beladungsgutes 4, insbesondere der Schwefelsäure vor und/oder während der Sulfonierung, in einen oder beiden der äußeren axialen Abschnitte 8. Der Rücklaufschutz bzw. Überlaufschutz schützt auch bei einer Befüllung des Drehrohrs 1 vor einem Überlauf des Befüllungsgutes 4 in einen oder beide der äußeren axialen Abschnitte 8.

Der Rücklaufschutz bzw. Überlaufschutz ist insbesondere bei der Behandlung mit Schwefelsäure, ganz besonders bei der Sulfonierung, von Bedeutung. Der Rücklaufschutz verhindert nämlich, dass beim Betrieb des Drehrohrs 1, insbesondere bei der Sulfonierung, die Schwefelsäure in einen oder beide der äußeren axialen Abschnitte 8 fließt. Durch den Rücklaufschutz bzw. Überlaufschutz verbleibt die Schwefelsäure letztlich im mittigen axialen Abschnitt 7.

In den äußeren axialen Abschnitten 8 herrschen andere Reaktionsbedingungen, insbesondere Temperaturen, als im mittigen axialen Abschnitt 7. Dies liegt u. a. daran, dass die äußeren axialen Abschnitte 8 nicht gezielt beheizt werden und Quarzglas eine sehr geringe Wärmeleitfähigkeit hat (ca. 1,38 W/ (m. K) bei 20°C). Folglich würde statt einer Sulfonierung die Schwefelsäure in den äußeren axialen Abschnitten 8 kondensieren und nicht mehr zur Sulfonierung zur Verfügung stehen. Außerdem verhindert der Rücklaufschutz bzw. Überlaufschutz, dass das Beladungsgut 4 in die äußeren axialen Abschnitte 8 gelangt, dass dort nicht hinreichend durchmischt wird. Der Rücklaufschutz bzw. Überlaufschutz des Drehrohrs 1 führt also zu einer höheren Ausbeute, zum vollständigeren Ablauf der Reaktionen und zu einer homogeneren Sulfonierung.

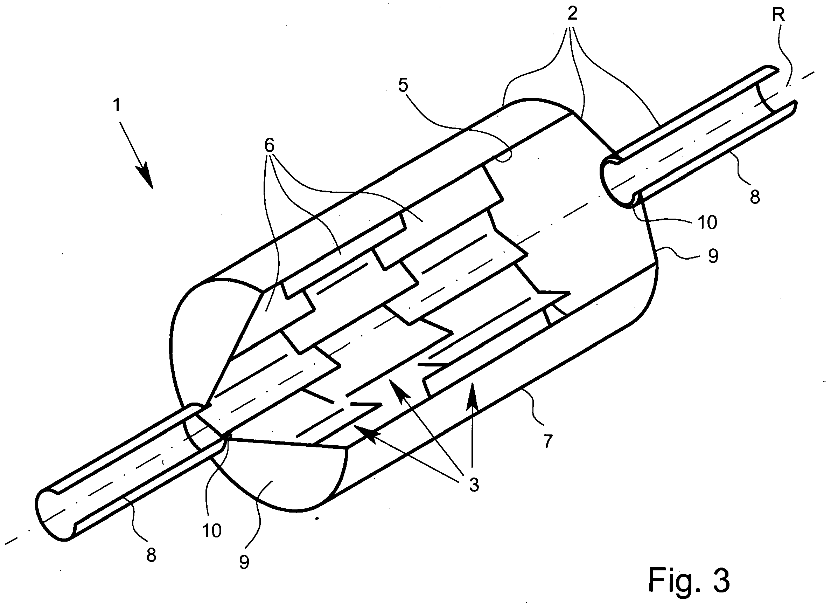

Der Rücklaufschutz bzw. Überlaufschutz des Drehrohrs 1 ist dadurch gebildet, dass einer oder beide der äußeren axialen Abschnitte 8 in axialer Richtung jeweils mit seinem dem jeweiligen Übergangsabschnitt 9 benachbarten Ende 10 in den jeweiligen Übergangsabschnitt 9 hineinragt. Dies ist in den Fig. 1 und 3 zu besseren Veranschautichung übertrieben dargestellt.

Vorzugsweise beträgt der Überstand des jeweiligen überstehenden Endes 10 der äußeren axialen Abschnitte 8 in den jeweils benachbarten Übergangsabschnitt 9 3% bis 50%, bevorzugt 5% bis 30%, weiter bevorzugt 10% bis 20%, insbesondere im Wesentlichen 15% der Länge eines der beiden äußeren axialen Abschnitte 8. Absolut beträgt der Überstand des jeweiligen überstehenden Endes 10 der äußeren axialen Abschnitte 8 in den jeweils benachbarten Übergangsabschnitt 9 vorzugsweise mindestens 2 mm, bevorzugt mindestens 5 mm, weiter bevorzugt mindestens 7 mm, insbesondere zumindest im Wesentlichen 10 mm.

Bei der in Fig. 1 dargestellten und erfindungsgemäßen Ausführung sind die Mischelemente 6 plattenförmig ausgebildet, d. h. flächig und eben.

Vorzugsweise erstrecken sich die Mischelemente 6 zumindest im Wesentlichen in axialer Richtung, d. h. die größte Ausdehnung der Mischelemente 6 verläuft in axialer Richtung. Bei der in Fig. 1 dargestellten und bevorzugten Ausführungsform erstrecken sich die Mischelemente 6 achsparallel, d. h. parallel zur Rotationsachse R des Drehrohrs 1.

Bei der in Fig. 1 dargestellten und bevorzugten Ausführungsform weisen alle Mischelemente 6 die gleiche Länge, die gleiche Breite und die gleiche Dicke auf. Dabei bezeichnet der Begriff "Breite" der Mischelemente 6 die Ausdehnung der Mischelemente 6 in radialer Richtung des Drehrohrkörpers 2. Der Begriff "Dicke" der Mischelemente 6 bezeichnet die Ausdehnung der Mischelemente 6 in Umfangsrichtung des Drehrohrkörpers 2. Die gleiche Dimensionierung der Mischelemente 6 bedeutet letztlich Bauteilidentität, was zu Einsparungen bei der Herstellung der Mischelemente 6 sowie zu einem einfacheren und kostengünstigeren Einbau der Mischelemente 6 führt.

Bei der in Fig. 1 gezeigten und bevorzugten Ausführungsform sind die Mischelemente 6 zumindest im Wesentlichen vollständig in Drehrichtung D des Drehrohrs 1 zur Innenseite 5 des Drehrohrkörpers 2 jeweils um einen Neigungswinkel α geneigt. Dies ist in Fig. 2 veranschaulicht, in der schematisch ein Schnitt durch das Drehrohr 1 aus Fig. 1 entlang der Schnittlinie II/II aus Fig. 1 gezeigt ist. Die Mischelemente 6 können allerdings bezogen auf ihre Länge auch nur abschnittsweise in Drehrichtung D des Drehrohrs 1 zur Innenseite 5 des Drehrohrkörpers 2 jeweils um den Neigungswinkel a geneigt sein, d. h. die Mischelemente 6 verlaufen dann nicht mehr achsparallel. Die Neigung der Mischelemente 6 führt zu einer besseren Durchmischung des Beladungsgutes 4.

Bei dem in Fig. 1 und 2 dargestellten und bevorzugten Ausführungsbeispiel weisen alle Mischelemente 6 den gleichen Neigungswinkel α auf. Dies führt zu einem einheitlichen, einfacheren und kostengünstigeren Einbau der Mischelemente 6.

Vorzugsweise ragen die Mischelemente 6 in radialer Richtung um nicht mehr als die Größe des Radius des Drehrohrkörpers 2 in den Drehrohrkörper 2 hinein. Mit anderen Worten beträgt die Breite der Mischelemente 6 nicht mehr als der Radius des Drehrohrkörpers 2 geteilt durch den Kosinus des Neigungswinkels α. Der jeweilige Neigungswinkel α der Mischelemente 6 wird dabei zwischen dem vom Kontaktbereich zwischen dem Drehrohrkörper 2 und dem jeweiligen Mischelement 6 ausgehenden Radius des Drehrohrkörpers 2 und der in axialer Richtung durch das jeweilige Mischelement 6 verlaufenden Ebene gemessen. In Fig. 2 ist die Breite der Mischelemente 6 jeweils durch eine gestrichelte Linie dargestellt.

Vorzugsweise beträgt der jeweilige Neigungswinkel α der Mischelemente 6 1° bis 60°, bevorzugt 20° bis 55°, weiter bevorzugt 40° bis 50°, insbesondere zumindest im Wesentlichen 45°. Der jeweilige Neigungswinkel α der Mischelemente 6 wird dabei zwischen dem vom Kontaktbereich zwischen dem Drehrohrkörper 2 und dem jeweiligen Mischelement 6 ausgehenden Radius des Drehrohrkörpers 2 und der in axialer Richtung durch das jeweilige Mischelement 6 verlaufenden Ebene gemessen. Es hat sich als besonders vorteilhaft erwiesen, wenn der jeweilige Neigungswinkel α der Mischelemente 6 zwischen 35° und 55° liegt, insbesondere zumindest im Wesentlichen 45° beträgt, wenn die jeweilige Breite der Mischelemente 6 zumindest im Wesentlichen 25% der jeweiligen Länge der Mischelemente 6, insbesondere 40 mm bis 60 mm, bevorzugt zumindest im Wesentlichen 50 mm beträgt. Bei dieser Anordnung bzw. Neigung der Mischelemente 6 ergibt sich eine sehr gute Durchmischung des Beladungsgutes 4.

Vorzugsweise beträgt die Länge der Mischelemente 6 10% bis 100%, bevorzugt 20% bis 75%, weiter bevorzugt 30% bis 50%, insbesondere zumindest im Wesentlichen 40% der Länge des mittigen axialen Abschnitts 7. Absolut beträgt die Länge der Mischelemente 6 vorzugsweise 50 mm bis 500 mm, bevorzugt 100 mm bis 300 mm, insbesondere im Wesentlichen 200 mm.

Vorzugsweise beträgt die Breite der Mischelemente 6 5% bis 50%, bevorzugt 10% bis 40%, weiter bevorzugt 20% bis 30%, insbesondere zumindest im Wesentlichen 25% der Länge der Mischelemente 6. Absolut beträgt die Breite der Mischelemente 6 vorzugsweise 10 mm bis 100 mm, bevorzugt 25 mm bis 75 mm, insbesondere im Wesentlichen 50 mm.

Vorzugsweise beträgt die Dicke der Mischelemente 6 0,1% bis 5%, bevorzugt 0,5% bis 3%, weiter bevorzugt 1 % bis 2%, insbesondere zumindest im Wesentlichen 1,5% der Länge der Mischelemente 6. Absolut beträgt die Dicke der Mischelemente 6 vorzugsweise 1 mm bis 10 mm, bevorzugt 2 mm bis 5 mm, insbesondere im Wesentlichen 3 mm.

Bei dem in Fig. 1 dargestellten und bevorzugten Ausführungsbeispiel weisen die Mischelemente 6 eine Länge von 200 mm, eine Breite von 50 mm und eine Dicke von 3 mm auf. Bei dieser Dimensionierung der Mischelemente 6 ergibt sich zum einen eine sehr gute Durchmischung des Beladungsgutes 4 und zum anderen eine Kontaktfläche zwischen den Mischelementen 6 und dem Drehrohrkörper 2, die sich als vorteilhaft hinsichtlich der hervorgerufenen Eigenspannungen und der Stabilität des Drehrohrs 1 erwiesen hat.

Bei der ersten bevorzugten Ausführungsform sind im mittigen axialen Abschnitt 7 mehrere, vorzugsweise zehn Mischelemente 6 in einer ersten Reihe in Umfangsrichtung voneinander beabstandet befestigt bzw. angebracht. In Fig. 1 ist die erste Reihe im linken Teil des mittigen axialen Abschnitts 7 zu sehen. Die erste Reihe der Mischelemente 6 bildet einen Mischabschnitt 3. Die Länge der ersten Reihe entspricht der Länge der Mischelemente 6 der ersten Reihe.

Darüber hinaus sind im mittigen axialen Abschnitt 7 mehrere, vorzugsweise zehn Mischelemente 6 in einer zweiten Reihe in Umfangsrichtung voneinander beabstandet befestigt. In Fig. 1 sind die Mischelemente 6 der zweiten Reihe im mittleren Teil des mittigen axialen Abschnitts 7 zu sehen. Die Mischelemente 6 der zweiten Reihe sind hier gegenüber den Mischelementen 6 der ersten Reihe in axialer Richtung versetzt, insbesondere überlappend, und/oder in Umfangsrichtung versetzt befestigt. Somit sind die Mischelemente 6 der zweiten Reihe in axialer Richtung nicht neben den Mischelementen 6 der ersten Reihe befestigt. In Fig. 2 ist daher im Wechsel jeweils ein Mischelement 6 der ersten Reihe in Umfangsrichtung neben einem Mischelement 6 der zweiten Reihe zu sehen. Bei dieser Anordnung der Mischelemente 6 ergibt sich eine sehr gute Durchmischung des Beladungsgutes 4.

Bei dem ersten bevorzugten Ausführungsbeispiel sind im mittigen axialen Abschnitt 7 mehrere, vorzugsweise zehn Mischelemente 6 in einer dritten Reihe in Umfangsrichtung voneinander beabstandet befestigt. Die Mischelemente 6 der dritten Reihe sind hier gegenüber den Mischelementen 6 der zweiten Reihe in axialer Richtung versetzt, insbesondere überlappend und in Umfangsrichtung versetzt befestigt. Ferner sind hier die Mischelemente 6 der dritten Reihe von den Mischelementen 6 der ersten Reihe in axialer Richtung beabstandet befestigt. Bei dem ersten bevorzugten Ausführungsbeispiel verläuft ein Mischelement 6 der ersten Reihe mit einem Mischelement 6 der dritten Reihe in axialer Richtung auf einer achsparallelen Geraden. Die Mischelemente 6 der ersten und dritten Reihe sind also in axialer Richtung ausgefluchtet. In Fig. 2 sind die Mischelemente 6 der dritten Reihe dementsprechend von den Mischelementen 6 der ersten Reihe verdeckt, da die Mischelemente 6 der dritten Reihe in Fig. 2 hinter den Mischelementen 6 der ersten Reihe verlaufen. Bei dieser Anordnung der Mischelemente 6 ergibt sich eine sehr gute Durchmischung des Beladungsgutes 4.

Auch die zweite und dritte Reihe bilden jeweils einen Mischabschnitt 3. Vorzugsweise haben die Mischelemente 6 einer und/oder aller Reihen den gleichen Abstand zueinander in Umfangsrichtung.

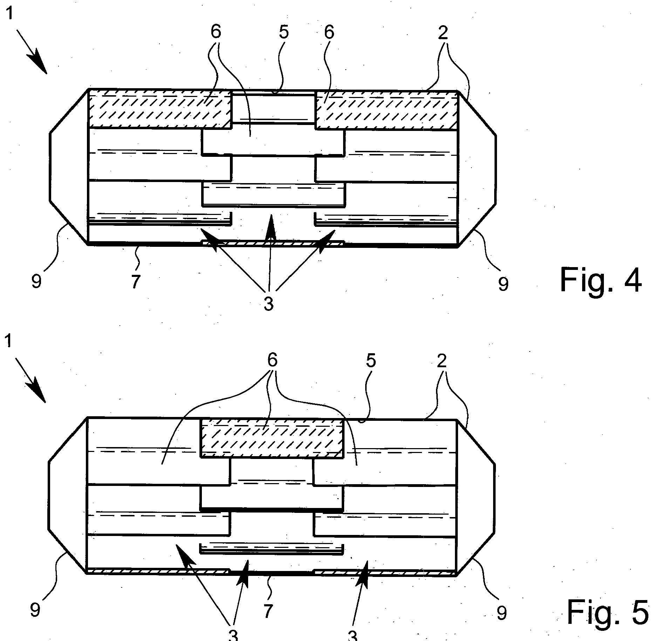

Fig. 3 zeigt schematisch eine perspektivische Ansicht der ersten bevorzugten Ausführungsform des erfindungsgemäßen Drehrohrs 1 aus Fig. 1, wobei ein Teil des Drehrohrs 1 ausgeschnitten ist. Fig. 4 zeigt schematisch einen Schnitt durch das Drehrohr 1 aus Fig. 1 entlang der Schnittlinie IV/IV aus Fig. 2. Fig. 5 zeigt schematisch einen Schnitt durch das Drehrohr 1 aus Fig. 1 entlang der Schnittlinie V/V aus Fig. 2. Diese Figuren dienen zur besseren Veranschaulichung der bevorzugten Anordnung der Mischelemente 6 des Drehrohrs 1 aus Fig. 1.

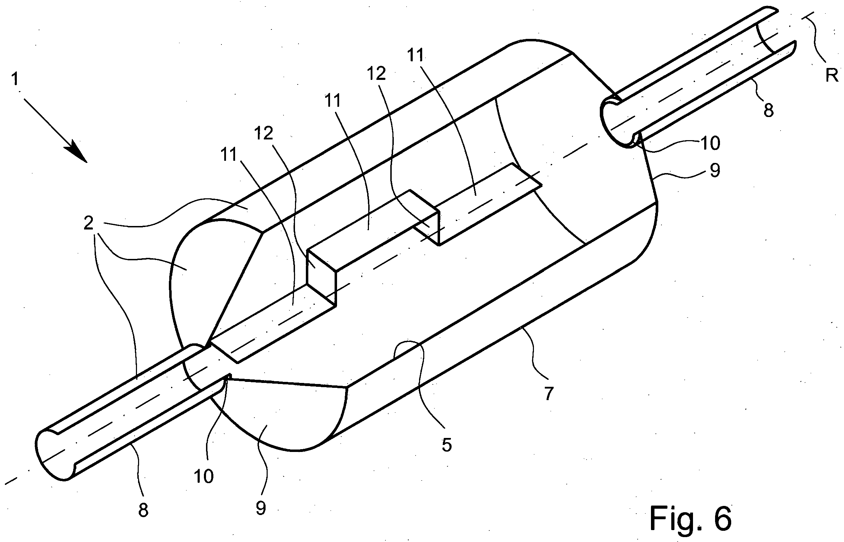

Fig. 6 zeigt schematisch eine perspektivische Ansicht einer zweiten bevorzugten Ausführungsform des erfindungsgemäßen Drehrohrs 1, wobei ein Teil des Drehrohrs 1 aufgeschnitten ist. Bei der zweiten bevorzugten Ausführungsform des erfindungsgemäßen Drehrohrs 1 werden mindestens zwei, vorzugsweise drei Reihen, also Mischabschnitte 3, durch ein an der Innenseite 5 des Drehrohrkörpers 2 befestigtes, vorzugsweise einstückiges Mischelement 6 gebildet. Vorzugsweise weist das Mischelement 6 mehrere, bevorzugt drei in axialer Richtung verlaufende Mischbereiche 11 und mehrere, bevorzugt zwei in Umfangsrichtung verlaufende Separatorbereiche 12 auf. Die Separatorbereiche 12 verhindern bzw. minimieren einen axialen Transport des Beladungsgutes 4. Diese Ausführungsform ermöglicht eine einfache und kostengünstige Realisierung eines erfindungsgemäßen Drehrohrs 1. Im Übrigen können von den Mischelementen 6 getrennte oder auch damit verbundene Separatorbereiche 12 bei der ersten bevorzugten Ausführungsform gemäß Fig. 1 vorgesehen sein.

Neben den Reihen bzw. Mischabschnitten 3, die durch das eine Mischelement 6 gebildet werden, können weitere Reihen bzw. Mischabschnitte 3 angeordnet sein, z. B. mit mehreren Mischelementen 6 - wie bei der ersten bevorzugten Ausführungsform beschrieben.

Bei der in Fig. 6 dargestellten zweiten bevorzugten Ausführungsform sind die Mischbereiche bezogen auf ihre Länge zumindest im Wesentlichen abschnittsweise, vorzugsweise vollständig, in Drehrichtung D des Drehrohrs 1 zur Innenseite 5 des Drehrohrkörpers 2 um einen Neigungswinkel α geneigt. Der jeweilige Neigungswinkel α der Mischbereiche 11 beträgt vorzugsweise 1° bis 60°, bevorzugt 20° bis 55°, weiter bevorzugt 40° bis 50°, insbesondere zumindest im Wesentlichen 45°. Durch die Neigung der Mischebereiche 11 wird die Durchmischung des Beladungsguts 4 verbessert.

Vorzugsweise bestehen der Drehrohrkörper 2 und die Mischelemente 6 zumindest im Wesentlichen aus einem Quarzglas, dessen Gehalt an den in Tabelle 1 angegebenen Stoffen die in dieser Tabelle angegeben Höchstwerte nicht überschreitet.

**Tabelle 1**

| **Gehalt an** | **beträgt höchstens** | **vorzugsweise höchstens** |
|---|---|---|
| Aluminium | 40 ppm | 20 ppm |
| Calcium | 3 ppm | 1,5 ppm |
| Chrom | 0,1 ppm | 0,05 ppm |
| Kupfer | 0,1 ppm | 0,05 ppm |
| Eisen | 2 ppm | 1 ppm |
| Kalium | 3 ppm | 1,5 ppm |
| Lithium | 3 ppm | 1,5 ppm |
| Mangan | 0,2 ppm | 0,1 ppm |
| Natrium | 3 ppm | 1,5 ppm |
| Nickel | 0,04 ppm | 0,02 ppm |
| Titan | 4 ppm | 2 ppm |
| Zirconium | 5,4 ppm | 2,7 ppm |
| OH | 90 ppm | 45 ppm |

Vorzugsweise ist das Quarzglas, aus dem der Drehrohrkörper 2 und die Mischelemente 6 zumindest im Wesentlichen bestehen, der ersten Hydrolyseklasse nach DIN 12111 und/oder der ersten Säureklasse nach DIN 12116 und/oder der ersten Laugenklasse nach DIN 52322 zugeordnet.

Das verwendete Quarzglas weist vorzugsweise eine obere Entspannungsgrenze von mindestens 1.100°C, bevorzugst mindestens 1.200°C, insbesondere, zumindest im Wesentlichen 1.204°C auf.

Vorzugsweise weist das verwendete Quarzglas eine untere Entspannungsgrenze von mindestens 900°C, bevorzugt mindestens 1.000°C, insbesondere zumindest im Wesentlichen 1.054°C auf.

Vorzugsweise ermöglicht das verwendete Quarzglas eine kurzzeitige Gebrauchstemperatur von mindestens 1.200°C, bevorzugt mindestens 1.300°C. Vorzugsweise ermöglicht das verwendete Quarzglas eine langzeitige Gebrauchstemperatur von mindestens 1.000°C, bevorzugt mindestens 1.100°C.

Das erfindungsgemäße Drehrohr 1 kann derart weitergebildet sein, dass die äußeren axialen Abschnitte 8 jeweils eine Einlass- und/oder Auslassöffnung zum Einführen, Auslassen und Durchleiten von Gasen, beispielsweise zum Einleiten von Inertgasen für die Carbonisierungsphase bei der Aktivkohleherstellung und zum Einleiten von Oxidationsgasen für die Aktivierungsphase bei der Aktivkohleherstellung, sowie zur Befüllung und Entleerung des Beladungsgutes 4 aufweisen. Letztlich handelt es sich bei den äußeren axialen Abschnitten 8 um Hohlabschnitte.

Wie zuvor beschrieben, wird das Drehrohr 1 nach der vorliegenden Erfindung in Drehrohröfen zur Herstellung von Aktivkohle verwendet. Gegenstand der vorliegenden Erfindung - gemäß einem zweiten Aspekt der vorliegenden Erfindung - ist somit ein Drehrohrofen zur Herstellung von Aktivkohle mittels Sulfonierung, Carbonisierung und Aktivierung in einem diskontinuierlichen Prozess, welcher das zuvor beschriebene Drehrohr 1 nach der vorliegenden Erfindung aufweist. Vorzugsweise weist der Drehrohrofen eine Heizeinrichtung zur direkten und/oder indirekten Beheizung des Drehrohrs 1, insbesondere des mittigen axialen Abschnitts 7, auf.

Weiterer Gegenstand der vorliegenden Erfindung - gemäß einem dritten Aspekt der Erfindung - ist die Verwendung eines wie zuvor beschriebenen Drehrohrs 1 bzw. eines dieses Drehrohr 1 enthaltenen Drehrohrofens zur Herstellung von Aktivkohle mittels Sulfonierung, Carbonisierung und Aktivierung in einem diskontinuierlichen Prozess. Die Herstellung der Aktivkohle erfolgt vorzugsweise auf Basis kohlenstoffhaltiger Ausgangsmaterialien, insbesondere organischer Polymere, ganz besonders divinylbenzolvernetzte Polystyrole, vorzugsweise in Form kleiner Körnchen oder Kügelchen. Dabei wird die Carbonisierung vorzugsweise bei Temperaturen von 100°C bis 750°C, bevorzugt 150°C bis 650°C, insbesondere 200°C bis 600°C durchgeführt, besonders bevorzugt unter inerter oder allenfalls leicht oxidierender Atmosphäre. Dabei kann der Carbonisierung noch eine Stufe der Vorcarbonisierung bzw. Vorschwelung vorgeschaltet sein. Die Aktivierung wird vorzugsweise bei Temperaturen von 700°C bis 1.200°C, bevorzugt 800°C bis 1.100°C, besonders bevorzugt 850°C bis 1.000°C durchgeführt. Vorzugsweise wird die Aktivierung unter kontrolliert bzw. selektiv oxidierenden Bedingungen, insbesondere unter kontrolliert oxidierender Atmosphäre, durchgeführt.

Die in den Fig.1 bis 6 dargestellten Ausführungsbeispiele stellen nur eine, allerdings bevorzugte Teilmenge der Varianten eines erfindungsgemäßen Drehrohrs 1 dar.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

### Beispiel 1: Erfindungsgemäßes Drehrohr aus Quarzglas mit Mischabschnitten und beidseitigem Rücklaufschutz (Erfindung)

In einem erfindungsgemäßen Drehrohrofen aus Quarzglas mit Mischabschnitten und beidseitigem Rücklaufschutz gemäß den Figurendarstellungen 1 bis 5 und der vorangehenden Figurenbeschreibung wurde Aktivkohle wie folgt hergestellt (Abmaße der Drehrohrs: Innendurchmesser 800 mm, Länge 1500 mm, Länge der Mischabschnitte jeweils 600 mm):
1.000 kg eines-herkömmlichen Kationenaustauscherharzvorläufers vom Geltyp auf Basis von divinylbenzolvernetztem Polystyrol in Kugelform mit einem mittleren Partikeldurchmesser von etwa 0,7 mm wurden in das besagte Drehrohr eingefüllt und zunächst bei 100 °C für ca. 1 Stunde getrocknet. Nachfolgend wurden 100 kg konzentrierter Schwefelsäure (Oleum) unter Stickstoffatmosphäre hinzugegeben und intensiv mit den Polymerkügelchen zu Zwecken der Sulfonierung gemischt und auf Temperaturen bis 300 °C aufgeheizt. Zunächst entweicht Wasserdampf, Schwefeldioxid und geringe Mengen an Schwefelsäure, schließlich auch Kohlenwasserstoffe infolge der Depolymerisation und Kohlendioxid. Die Sulfonierung geht unmittelbar in eine Carbonisierung unter Inertgasatmosphäre mittels Aufheizen auf 800 °C über. Es entweichen Kohlendioxid, etwas Kohlenmonoxyd, Kohlenwasserstoffe und Schwefeldioxid. Der Gewichtsverlust, bezogen auf Trockensubstanz, beträgt ca. 45 %. Das carbonisierte Material weist infolge von Materialverlust und Schrumpfung einen mittleren Partikeldurchmesser von etwa 0,6 mm bei einer BET-Oberfläche von ca. 250 m²/g auf. Der Carbonisierungsvorgang dauert insgesamt ca. vier Stunden.

Das gesamte carbonisierte Material (38,5 kg) wurde nachfolgend bei 900 °C mit einem Gemisch von 75 % Stickstoff und 25 % Wasserdampf begast und nach zwei Stunden Aktivierung im Drehrohr abgekühlt. Nach dieser Aktivierung resultierte eine kugelförmige Aktivkohle, welche vollkommen frei von Eisen ist, mit einer BET-Oberfläche von ca. 1.475 m²/g und einer Druckfestigkeit von 45 Newton pro Kügelchen von etwa 0,5 mm Durchmesser. Die Ausbeute betrug, bezogen auf carbonisiertes Material, etwa 66 %.

### Beispiel 2: Drehrohr aus Quarzglas ohne Mischabschnitte und ohne Rücklaufschutz (Vergleich)

Beispiel 1 wurde in einem herkömmlichen Drehrohr aus Quarzglas ohne Mischabschnitte und ohne Rücklaufschutz, aber mit den ansonsten gleichen Abmaßen wie in Beispiel 1 wiederholt. Bei der Sulfonierung trat infolge des fehlenden Rücklaufschutzes ein gewisser Verlust an Schwefelsäure auf, welche zum Teil in die Halterohre des Drehrohrs floss (ebenso wie Teile des zu sulfonierenden Polymermaterials). Die Carbonisierungs- und Aktivierungsdauern verlängerten sich infolge der verschlechterten Durchmischung jeweils um etwa 2 Stunden gegenüber Beispiel 1. Die Ausbeute nach der Aktivierung war deutlich geringer als in Beispiel 1 (Ausbeute, bezogen auf carbonisiertes Material: ca. 48 %). Die BET-Öberfläche nach der Aktivierung betrug nur ca. 1.044 m²/g bei einer Druckfestigkeit von nur 33 Newton pro Kügelchen von etwa 0,5 mm Durchmesser. Auch wurde ein geringer Teil des Beladungsgutes während der Aktivierung mit dem Aktivierungsgas infolge des fehlenden Rücklaufschutzes mitgerissen.

### Beispiel 3: Drehrohr aus Quarzglas ohne Mischabschnitte und ohne Rücklaufschutz, aber mit noppenartigen, ins Innere des Drehrohrs ragenden Einbuchtungen im Drehrohrmantel (Vergleich)

Beispiel 1 wurde in einem herkömmlichen Drehrohr aus Quarzglas ohne Mischabschnitte und ohne Rücklaufschutz, aber mit noppenartigen, ins Innere des Drehrohrs ragenden Einbuchtungen im Drehrohrmantel und den ansonsten gleichen Abmaßen wie in Beispiel 1 wiederholt. Bei der Sulfonierung trat infolge des fehlenden Rücklaufschutzes ein gewisser Verlust an Schwefelsäure auf, welche zum Teil in die Halterohre des Drehrohrs floss (ebenso wie Teile des zu sulfonierenden Polymermaterials). Die Carbonisierungs- bzw. Aktivierungsdauer verlängerte sich infolge der verschlechterten Durchmischung um etwa 1,5 Stunden bzw. 1 Stunde gegenüber Beispiel 1, war aber infolge der noppenartigen, ins Innere des Drehrohrs ragenden Einbuchtungen gegenüber Beispiel 2 geringfügig verbessert. Die Ausbeute nach der Aktivierung war deutlich geringer als in Beispiel 1 (Ausbeute, bezogen auf carbonisiertes Material: ca. 55 %). Die BET-Oberfläche nach der Aktivierung betrug nur ca. 1.205 m²/g bei einer Druckfestigkeit von nur 38 Newton pro Kügelchen von etwa 0,5 mm Durchmesser. Auch wurde ein geringer Teil des Beladungsgutes während der Aktivierung mit dem Aktivierungsgas infolge des fehlenden Rücklaufschutzes mitgerissen.

Die vorstehenden Beispiele belegen eindrucksvoll die Überlegenheit des erfindungsgemäßen Drehrohrs bzw. Drehrohrofens. Es wird eine effiziente Durchmischung und Verwirbelung des Beladungsguts erreicht, einhergehend mit kürzeren Prozessdauern und verbesserten Produkten. Auch wird ein unerwünschtes Austreten der Schwefelsäure bei der Sulfonierung sowie des Beladungsgutes infolge des Rücklaufschutzes in effizienter Weise verhindert. Auch ermöglicht das erfindungsgemäße Drehrohr bzw. der erfindungsgemäße Drehrohrofen erstmals die Durchführung des Gesamtprozesses in einem Drehrohr bzw. Drehrohrofen aus Quarzglas.

### Bezugszeichenliste:

- 1: Drehrohr
- 2: Drehrohrkörper
- 3: Mischabschnitt
- 4: Beladungsgut
- 5: Innenseite des Drehrohrkörpers
- 6: Mischelement
- 7: mittiger axialer Abschnitt
- 8: äußerer axialer Abschnitt
- 9: Übergangsabsehnitt
- 10: überstehendes Ende des Übergangsabschnitts
- 11: Mischbereich
- 12: Separatorbereich

- D: Drehrichtung
- R: Rotationsachse
- α: Neigungswinkel

## Patentansprüche

1. Drehrohr (1) für einen Drehrohrofen, ausgebildet zur Herstellung von Aktivkohle, insbesondere mittels Sulfonierung, Carbonisierung und Aktivierung polymerer Ausgangsmaterialien in einem diskontinuierlichen Prozess, mit einem Drehrohrkörper (2) und mehreren Mischabschnitten (3) mit mehreren Mischelementen (6) zur Durchmischung eines Beladungsgutes (4), wobei der Drehrohrkörper (2) und die Mischelemente (6) zumindest im Wesentlichen aus Quarzglas bestehen,
**dadurch gekennzeichnet,**
**dass** die Mischelemente (6) an einer Innenseite (5) des Drehrohrkörpers (2) befestigt und mit der Innenseite (5) fest verbunden sind, wobei die Mischelemente (6) fest und dauerhaft mit dem Drehrohrkörper (2) verbunden sind und wobei die Mischelemente (6) plattenförmig ausgebildet sind;
**dass** der Drehrohrkörper (2) einen mittigen axialen Abschnitt (7) mit einem ersten Innenquerschnitt, zwei äußere axiale Abschnitte (8) mit jeweils einem zweiten Innenquerschnitt und zwei Übergangsabschnitte (9) mit jeweils einem sich verjüngenden dritten Innenquerschnitt aufweist; und
**dass** das Drehrohr (1) an einem oder beiden der äußeren axialen Abschnitte (8) einen Rücklaufschutz und/oder Überlaufschutz für feste und/oder flüssige Materialien aufweist, wobei der Rücklaufschutz und/oder Überlaufschutz derart ausgebildet ist, dass einer oder beide der äußeren axialen Abschnitte (8) in axialer Richtung jeweils mit seinem dem jeweiligen Übergangsabschnitt (9) benachbarten Ende (10) in den jeweiligen Übergangsabschnitt (9) hineinragt.

2. Drehrohr nach Anspruch 1, **dadurch gekennzeichnet,**
**dass** das Mischelement (6) mittels eines Bindemittels an der Innenseite (5) des Drehrohrkörpers (2) angebracht und/oder befestigt ist und/oder
**dass** das Mischelement (6) und der Drehrohrkörper (2) gegebenenfalls über das Bindemittel durch spannungsarmes Glühen und bevorzugt Nachtempern miteinander verbunden sind und/oder
**dass** das Mischelement (6) im mittigen axialen Abschnitt (7) angeordnet ist.

3. Drehrohr nach Anspruch 1 oder 2, **dadurch gekennzeichnet,**
**dass** der mittige axiale Abschnitt (7) und/oder die beiden äußeren axialen Abschnitte (8) zylindrisch, insbesondere jeweils als gerader Hohlzylinder ausgebildet ist/sind und/oder
**dass** die beiden Übergangsabschnitte (9) konus- und/oder kegelstumpfförmig ausgebildet sind und/oder
**dass** der erste Innenquerschnitt des mittigen axialen Abschnitts (7) größer ist als der zweite Innenquerschnitt der beiden äußeren axialen Abschnitte (8) und/oder
**dass** der mittige axiale Abschnitt (7) zwischen den beiden Übergangsabschnitten (9) und/oder den beiden äußeren axialen Abschnitten (8) angeordnet ist und/oder
**dass** jeder Übergangsabschnitt (9) zwischen dem mittigen axialen Abschnitt (7) und jeweils einem der beiden äußeren axialen Abschnitte (8) angeordnet ist und/oder dass der mittige axiale Abschnitt (7) einen Innendurchmesser von 200 mm bis 1500 mm,
vorzugsweise 220 mm bis 1000 mm, bevorzugt 250 mm bis 750 mm, weiter bevorzugt 260 mm bis 500 mm, insbesondere zumindest im Wesentlichen 300 mm hat.

4. Drehrohr nach einem oder mehreren der voranstehenden Ansprüche, **dadurch gekennzeichnet,**
**dass** sich der Rücklaufschutz und/oder der Überlaufschutz im Übergang vom Übergangsabschnitt (9) zum äußeren axialen Abschnitt (8) befindet/befinden und/oder
**dass** der Rücklaufschutz und/oder der Überlaufschutz so ausgebildet ist/sind, dass er/sie einen Rücklauf und/oder Überlauf von Beladungsgut (4), insbesondere der Schwefelsäure vor und/oder während der Sulfonierung, in einen oder beide der äußeren axialen Abschnitte (8) verhindert/verhindern und/oder
**dass** der Überstand des überstehenden Endes (10) des äußeren axialen Abschnitts (8) in den benachbarten Übergangsabschnitt (9) mindestens 2 mm, vorzugsweise mindestens 5 mm, bevorzugt mindestens 7 mm, insbesondere zumindest im Wesentlichen 10 mm beträgt.

5. Drehrohr nach einem oder mehreren der voranstehenden Ansprüche, **dadurch gekennzeichnet,**
**dass** sich die Mischelemente (6) zumindest im Wesentlichen in axialer Richtung, vorzugsweise achsparallel erstrecken und/oder
**dass** alle Mischelemente (6) die gleiche Länge und/oder Breite und/oder Dicke aufweisen und/oder
**dass** die Mischelemente (6) bezogen auf ihre Länge zumindest im Wesentlichen abschnittsweise, vorzugsweise vollständig, in Drehrichtung (D) des Drehrohrs (1) zur Innenseite (5) des Drehrohrkörpers (2) jeweils um einen Neigungswinkel (α) geneigt sind und/oder
**dass** alle Mischelemente (6) den gleichen Neigungswinkel (α) aufweisen und/oder
**dass** der jeweilige Neigungswinkel (α) der Mischelemente (6) gemessen zwischen dem vom Kontaktbereich zwischen dem Drehrohrkörper (2) und dem jeweiligen Mischelement (6) ausgehenden Radius des Drehrohrkörpers (2) und der in axialer Richtung durch das jeweilige Mischelement (6) verlaufenden Ebene im Bereich von 1 bis 60°, bevorzugt 20 bis 55°, weiter bevorzugt 40 bis 50° liegt, insbesondere zumindest im Wesentlichen 45°, beträgt und/oder
**dass** die Länge der Mischelemente (6) 10% bis 100%, bevorzugt 20% bis 75%, weiter bevorzugt 30% bis 50%, insbesondere zumindest im Wesentlichen 40% der Länge des mittigen axialen Abschnitts (7) beträgt und/oder
**dass** die Mischelemente (6) eine Länge von 50 mm bis 500 mm, vorzugsweise 100 mm bis 300 mm, insbesondere zumindest im Wesentlichen 200 mm, aufweisen.

6. Drehrohr nach einem oder mehreren der voranstehenden Ansprüche, **dadurch gekennzeichnet,**
**dass** im mittigen axialen Abschnitt (7) mehrere, vorzugsweise zehn Mischelemente (6) in einer ersten Reihe in Umfangsrichtung voneinander beabstandet befestigt sind und/oder
**dass** im mittigen axialen Abschnitt (7) mehrere, vorzugsweise zehn Mischelemente (6) in einer zweiten Reihe in Umfangsrichtung voneinander beabstandet befestigt sind und/oder
**dass** die Mischelemente (6) der zweiten Reihe gegenüber den Mischelementen (6) der ersten Reihe in axialer Richtung versetzt, insbesondere überlappend, und/oder in Umfangsrichtung versetzt befestigt sind.

7. Drehrohr nach einem oder mehreren der voranstehenden Ansprüche, **dadurch gekennzeichnet,**
**dass** im mittigen axialen Abschnitt (7) mehrere, vorzugsweise zehn Mischelemente in einer dritten Reihe in Umfangsrichtung voneinander beabstandet befestigt sind und/oder
**dass** die Mischelemente (6) der dritten Reihe gegenüber den Mischelementen (6) der zweiten Reihe in axialer Richtung versetzt, insbesondere überlappend, und/oder in Umfangsrichtung versetzt befestigt sind und/oder
**dass** die Mischelemente (6) der dritten Reihe von den Mischelementen (6) der ersten Reihe in axialer Richtung beabstandet sind und/oder
**dass** jeweils ein Mischelement (6) der ersten Reihe mit einem Mischelement (6) der dritten Reihe in axialer Richtung auf einer achsparallelen Geraden verläuft.

8. Drehrohr nach einem oder mehreren der voranstehenden Ansprüche, **dadurch gekennzeichnet,**
**dass** mindestens zwei Mischabschnitte (3) durch ein an der Innenseite (5) des Drehrohrkörpers (2) befestigtes und mit der Innenseite (5) fest verbundenes, vorzugsweise einstückiges Mischelement (6) gebildet werden und/oder
**dass** das Mischelement (6) mehrere in axialer Richtung verlaufende Mischbereiche (11) und mehrere in Umfangsrichtung verlaufende Separatorbereiche (12) aufweist.

9. Drehrohr nach einem oder mehreren der voranstehenden Ansprüche, **dadurch gekennzeichnet, dass** die Mischbereiche (11) bezogen auf ihre Länge zumindest im Wesentlichen abschnittsweise, vorzugsweise vollständig, in Drehrichtung (D) des Drehrohrs (1) zur Innenseite (5) des Drehrohrkörpers (2) um einen Neigungswinkel (α) geneigt sind.

10. Drehrohr nach einem oder mehreren der voranstehenden Ansprüche, **dadurch gekennzeichnet, dass** der jeweilige Neigungswinkel (α) der Mischbereiche (11) gemessen zwischen dem vom Kontaktbereich zwischen dem Drehrohrkörper (2) und dem jeweiligen Mischbereich (11) ausgehenden Radius des Drehrohrkörpers (2) und der in axialer Richtung durch den jeweiligen Mischbereich (11) verlaufenden Ebene im Bereich von 1 bis 60°, insbesondere 20 bis 55°, bevorzugt 40 bis 50° liegt, insbesondere zumindest im Wesentlichen 45° beträgt.

11. Drehrohr nach einem oder mehreren der voranstehenden Ansprüche, **dadurch gekennzeichnet, dass** der Drehrohrkörper (2) und das Mischelement (6) zumindest im Wesentlichen aus einem solchen Quarzglas bestehen, wobei das Quarzglas einen Gehalt an Aluminium von höchstens 40 ppm, vorzugsweise höchstens 20 ppm aufweist.

12. Drehrohr nach einem oder mehreren der voranstehenden Ansprüche, **dadurch gekennzeichnet, dass** die äußeren axialen Abschnitte (8) jeweils eine Eintass- und/oder Auslassöffnung zum Einführen, Auslassen und Durchleiten von Gasen sowie zur Befüllung und Entleerung des Beladungsgutes (4) aufweisen.

13. Drehrohrofen zur Herstellung von Aktivkohle mittels Sulfonierung, Carbonisierung und Aktivierung in einem diskontinuierlichen Prozess, aufweisend ein Drehrohr (1) nach den Ansprüchen 1 bis 12.

14. Drehrohrofen nach Anspruch 13, **dadurch gekennzeichnet, dass** der Drehrohrofen eine Heizeinrichtung zur direkten und/oder indirekten Beheizung des Drehrohrs (1) aufweist.

15. Verwendung eines Drehrohrs nach den Ansprüchen 1 bis 12 oder eines Drehrohrofens nach den Ansprüchen 13 oder 14 zur Herstellung von Aktivkohle mittels Sulfonierung, Carbonisierung und Aktivierung in einem diskontinuierlichen Prozess.

## Claims

1. Rotary pipe (1) for a rotary kiln, which is designed for the production of activated carbon, in particular by means of sulfonation, carbonization and activation of polymer starting materials in a discontinuous process, comprising a rotary pipe body (2) and a plurality of mixing sections (3) with a plurality of mixing elements (6) for mixing a charged material (4), wherein the rotary body (2) and the mixing elements (6) at least substantially consist of quartz glass
**characterized in that**
the mixing elements (6) are fastened to an inner side (5) of the rotary pipe body (2) and are fixedly connected to the inner side (5), wherein the mixing elements (6) are firmly and permanently connected to the rotary pipe body (2), and wherein the mixing elements (6) are plate-shaped;
the rotary pipe body (2) comprises a central axial section (7) with a first inner cross-section, two outer axial sections (8) each having a second inner cross-section and two transition sections (9) each having a tapered third inner cross-section; and
the rotary pipe (1) comprises a return flow protection and/or overflow protection for solid and/or liquid materials on one or both of the outer axial sections (8), wherein the return flow protection and/or overflow protection is/are so designed that one or both of the axial sections (8) respectively project(s) its end (10) adjacent to the respective transitional section (9) into the respective transition section (9) in the axial direction.

2. Rotary pipe according to claim 1,
**characterized in that**
the mixing element (6) is attached and/or fastened by means of a binding means to the inner side (5) of the rotary pipe body (2), and/or
the mixing element (6) and the rotary pipe body (2) are optionally connected to one another via the binding means through stress-free annealing and preferably post-tempering, and/or
the mixing element (6) is arranged in the central axial section (7).

3. Rotary pipe according to claim 1 or 2,
**characterized in that**
the central axial section (7) and/or the two outer axial sections (8) is/are cylindrical, in particular in the form of straight hollow cylinders, and/or
the two transition sections (9) are conical and/or frustoconical, and/or
the first inner cross-section of the central axial section (7) is larger than the second internal cross-section of the two outer axial sections (8), and/or
the central axial section (7) is arranged between the two transition sections (9) and/or the two outer axial sections (8), and/or
each transition section (9) is arranged between the central axial section (7) and one of the outer axial sections (8), and/or
the central axial section (7) has an internal diameter of 200 mm to 1500 mm, preferably 220 mm to 1000 mm, more preferably 250 mm to 750 mm, particularly preferably 260 mm to 500 mm, in particular at least substantially 300 mm.

4. Rotary pipe according to one or more of the preceding claims,
**characterized in that**
the return flow protection and/or the overflow protection is/are located in the transition from the transition section (9) to the outer axial section (8), and/or
the return flow protection and/or the overflow protection is/are designed in such a way that the return flow and/or overflow of the charged material (4), in particular, in the case of sulfuric acid, is/are prevented in one or both of the outer axial sections (8), before and/or during the sulfonation,
the overhang of the projecting end (10) of the axial section (8) into the adjacent transition section (9) is at least 2 mm, preferably at least 5 mm, more preferably at least 7 mm, in particular at least substantially 10 mm.

5. Rotary pipe according to one or more of the preceding claims,
**characterized in that**
the mixing elements (6) extend at least substantially in the axial direction, preferably axially parallel, and/or
all the mixing elements (6) have the same length and/or width and/or thickness, and/or
the mixing elements (6) are respectively inclined at an angle of inclination (α) in the direction of rotation (D) of the rotary pipe (1) to the inner side (5) of the pipe body (2), at least substantially section-wise, preferably completely, with respect to their length, all mixing elements (6) have the same inclination angle (α), and/or
the respective inclination angle (α) of the mixing elements (6) is measured between the radius of the rotary pipe body (2) extending from the contact area between the rotary pipe body (2) and the respective mixing element (6) and the plane through the respective mixing element (6), and is in the range from 1 to 60°, preferably 20 to 55°, more preferably 40 to 50°, in particular at least substantially 45°, and/or
the length of the mixing elements (6) is 10% to 100%, preferably 20% to 75%, more preferably 30% to 50%, in particular at least substantially 40%, of the length of the central axial section (7) and/or
the mixing elements (6) have a length of 50 mm to 500 mm, preferably 100 mm to 300 mm, in particular at least substantially 200 mm.

6. Rotary pipe according to one or more of the preceding claims,
**characterized in that**
a plurality of preferably ten mixing elements (6) are fastened in a first row at a distance from one another in the circumferential direction in the central axial section (7), and/or
a plurality of preferably ten mixing elements (6) are fastened in a second row at a distance from one another in the circumferential direction in the central axial section (7), and/or
the mixing elements (6) of the second row are offset in the axial direction with respect to the mixing elements (6) of the first row, in particular overlapping and/or offset in the circumferential direction.

7. Rotary pipe according to one or more of the preceding claims,
**characterized in that**
several, preferably ten, mixing elements are fastened in the central axial section (7) in a third row at a distance from one another in the circumferential direction, and/or
the mixing elements (6) of the third row are offset in the axial direction, in particular overlapping and/or offset with respect to the mixing elements (6) of the second row in the circumferential direction, and/or
the mixing elements (6) of the third row are at a distance from the mixing elements (6) of the first row in the axial direction, and/or
a mixing element (6) of the first row with a mixing element (6) of the third row extends in the axial direction on a straight line parallel to the axis.

8. Rotary pipe according to one or more of the preceding claims,
**characterized in that**
at least two mixing sections (3) are formed by a mixing element (6) which is fastened to the inside (5) of the rotary pipe body (2) and is firmly connected to the inside (5), and/or
the mixing element (6) has a plurality of mixing regions (11) extending in the axial direction and a plurality of separator regions (12) extending in the circumferential direction.

9. Rotary pipe according to one or more of the preceding claims,
**characterized in that**
the mixing regions (11) are respectively inclined at an angle of inclination (α) in the direction of rotation (D) of the rotary pipe (1) to the inner side (5) of the pipe body (2), at least substantially section-wise, preferably completely.

10. Rotary pipe according to one or more of the preceding claims,
**characterized in that**
the respective inclination angle (α) of the mixing regions (11) is measured between the radius of the rotary pipe body (2) from the contact region between the rotary pipe body (2) and the respective mixing region (11) and the plane extending in the axial direction through the respective mixing region (11) and is in the range from 1 to 60°, preferably 20 to 55°, more preferably 40 to 50°, in particular at least substantially 45°.

11. Rotary pipe according to one or more of the preceding claims,
**characterized in that**
the rotary pipe body (2) and the mixing element (6) at least substantially consist of such a quartz glass, wherein the quartz glass comprises a content of aluminum of at most 40 ppm, preferably at most 20 ppm.

12. Rotary pipe according to one or more of the preceding claims.
**characterized in that**
the outer axial sections (8) each have an inlet and/or outlet opening for introducing, discharging and passing through gases, as well as for filling and emptying the charged material (4).

13. Rotary pipe kiln for the production of activated carbon by means of sulfonation, carbonization and activation in a batch process (1) according to claims 1 to 12.

14. Rotary pipe kiln according to claim 13,
**characterized in that**
the rotary kiln has a heating device for the direct and/or indirect heating of the rotary pipe (1).

15. Use of a rotary pipe according to the claims 1 to 12, or a rotary kiln according to the claims 13 or 14 for the production of activated carbon by means of sulfonation, carbonization and activation in a discontinuous process,

## Revendications

1. Tube rotatif (1) pour un four rotatif, conçu pour la fabrication de charbon actif, plus particulièrement au moyen d'une sulfonation, d'une carbonisation et d'une activation de matériaux de départ polymères dans un processus discontinu, avec un corps de tube rotatif (2) et plusieurs portions de mélange (3) avec plusieurs éléments de mélange (6) pour le mélange d'un produit de chargement (4), le corps de tube rotatif (2) et les éléments de mélange (6) étant constitués au moins essentiellement de verre de quartz,
**caractérisé en ce que**
les éléments de mélange (6) sont fixés au côté interne (5) du corps de tube rotatif (2) et fermement reliés avec le côté interne (5), les éléments de mélange (6) étant reliés de manière ferme et durable avec le corps de tube rotatif (2) et les éléments de mélange (6) présentant la forme de plaques ;
le corps de tube rotatif (2) comprenant une portion axiale centrale (7) avec une première section transversale interne, deux portions axiales externes (8) avec chacune une deuxième section transversale interne et deux portions de transition (9) avec chacune une troisième section transversale interne qui se rétrécit ; et
le tube rotatif (1) comprend, au niveau d'une ou de deux portions axiales externes (8), une protection anti-retour et/ou une protection anti-débordement pour des matériaux solides et/ou liquides, la protection anti-retour et/ou la protection anti-débordement étant conçue de façon à ce qu'un ou les deux portions axiales externes (8) dépasse chacune dans la direction axiale, avec son extrémité (10) proche de la portion de transition (9) correspondante, dans la portion de transition (9) correspondante.

2. Tube rotatif selon la revendication 1, **caractérisé en ce que**
l'élément de mélange (6) est monté ou fixé à l'aide d'un moyen de liaison au côté interne (5) du corps de tube rotatif (2) et/ou
l'élément de mélange (6) et le corps de tube rotatif (2) sont reliés entre eux, le cas échéant, par l'intermédiaire du moyen de liaison, par recuit sans tension, et de préférence par post-cuisson et/ou
l'élément de mélange (6) est disposé dans la portion axiale centrale (7).

3. Tube rotatif selon la revendication 1 ou 2, **caractérisé en ce que**
la portion axiale centrale (7) et/ou les deux portions axiales externes (8) présentent une forme cylindrique, plus particulièrement une forme de cylindre creux et droit et/ou
les deux portions de transition (9) présentent une forme conique et/ou tronconique et/ou
la première section transversale interne de la portion axiale centrale (7) est supérieure à la deuxième section transversale interne des deux portions axiales externes (8) et/ou
la portion axiale centrale (7) est disposée entre les deux portions de transition (9) et/ou les deux portions axiales externes (8) et/ou
chaque portion de transition (9) est disposée entre la portion axiale centrale (7) et chacune des deux portions axiales externes (8) et/ou
la portion axiale centrale (7) présente un diamètre intérieur de 200 mm à 1500 mm, de préférence de 200 mm à 1000 mm, de préférence de 250 mm à 750 mm, de préférence de 260 mm à 500 mm plus particulièrement d'au moins 300 mm.

4. Tube rotatif selon l'une des revendications précédentes, **caractérisé en ce que**
la protection anti-retour et/ou la protection anti-débordement se trouve(nt) dans la transition entre la portion de transition (9) et la portion axiale externe (8) et/ou
la protection anti-retour et/ou la protection anti-débordement étant conçue(s) de façon à empêcher un retour et/ou un débordement du produit de chargement (4), plus particulièrement de l'acide sulfurique avant et/ou pendant la sulfonation, dans une ou les deux portions axiales externes (8) et/ou
la saillie de l'extrémité en saillie (10) de la portion axiale externe (8) est, dans la portion de transition (9) adjacente, d'au moins 2 mm, de préférence d'au moins 5 mm, de préférence d'au moins 7 mm, plus particulièrement d'au moins 10 mm.

5. Tube rotatif selon l'une des revendications précédentes, **caractérisé en ce que**
les éléments de mélange (6) s'étendent au moins globalement dans la direction axiale, de préférence de manière parallèle et/ou
tous les éléments de mélange (6) présentent la même longueur et/ou largeur et/ou épaisseur et/ou
les éléments de mélange (6) sont inclinés, par rapport à leur longueur, au moins globalement partiellement, de préférence entièrement, dans le sens de rotation (D) du tube rotatif (1) par rapport à un côté interne (5) du corps de tube rotatif (2) d'un angle d'inclinaison (α) et/ou
tous les éléments de mélange (6) présentent le même angle d'inclinaison (α) et/ou
l'angle d'inclinaison (α) des éléments de mélange (6), mesuré entre le rayon du corps de tube rotatif (2) partant de la zone de contact entre le corps de tube rotatif (2) et l'élément de mélange (6) correspondant et le plan s'étendant dans la direction axiale à travers l'élément de mélange (6) correspondant, est de l'ordre de 1 à 60°, de préférence de 20 à 55°, de préférence de 40 à 50°, plus particulièrement d'au moins 45° et/ou
la longueur des éléments de mélange (6) représente de 10 % à 100 %, de préférence de 20 % à 75 %, de préférence de 30 % à 50 %, plus particulièrement d'au moins 40 % de la longueur de la portion axiale centrale (7) et/ou
les éléments de mélange (6) présentent une longueur de 50 mm à 500 mm, de préférence de 100 mm à 300 mm, plus particulièrement d'au moins 200 mm.

6. Tube rotatif selon l'une ou plusieurs revendications précédentes, **caractérisé en ce que**
dans la portion axiale centrale (7), sont fixés, avec une certaine distance entre eux, de préférence dix éléments de mélange (6) dans une première rangée dans la direction circonférentielle et/ou
dans la portion axiale centrale (7), sont fixés, avec une certaine distance entre eux, de préférence dix éléments de mélange (6) dans une deuxième rangée dans la direction circonférentielle et/ou
les éléments de mélange (6) de la deuxième rangée sont décalés par rapport aux éléments de mélange (6) de la première rangée dans la direction axiale, plus particulièrement sont fixés de manière superposée et/ou décalée dans la direction circonférentielle.

7. Tube rotatif selon l'une ou plusieurs des revendications précédentes, **caractérisé en ce que**
dans la portion axiale centrale (7), sont fixés, avec une certaine distance entre eux, de préférence dix éléments de mélange dans une troisième rangée dans la direction circonférentielle et/ou
les éléments de mélange (6) de la troisième rangée sont décalés par rapport aux éléments de mélange (6) de la deuxième rangée dans la direction axiale, plus particulièrement sont fixés de manière superposée et/ou décalée dans la direction circonférentielle et/ou
les éléments de mélange (6) de la troisième rangée sont écartés des éléments de mélange (6) la première rangée dans la direction axiale et/ou
un élément de mélange (6) de la première rangée s'étend, avec un élément de mélange (6) de la troisième rangée, dans la direction axiale, sur une droite parallèle.

8. Tube rotatif selon l'une ou plusieurs des revendications précédentes, **caractérisé en ce que**
au moins deux portions de mélange (3) sont constituées d'au moins un élément de mélange (6), de préférence d'une seule pièce, fixé au côté interne (5) du corps de tube rotatif (2) et relié fermement avec le côté interne (5) et/ou
l'élément de mélange (6) comprend plusieurs zones de mélange (11) s'étendant dans la direction axiale et plusieurs zones de séparation (12) s'étendant dans la direction circonférentielle.

9. Tube rotatif selon l'une ou plusieurs des revendications précédentes, **caractérisé en ce que** les zones de mélange (11) sont inclinées, par rapport à leur longueur, au moins globalement partiellement, de préférence entièrement, dans le sens de rotation (D) du tube rotatif (1), par rapport au côté interne (5) du corps de tube rotatif (2), d'un angle d'inclinaison (α).

10. Tube rotatif selon l'une ou plusieurs des revendications précédentes, **caractérisé en ce que** l'angle d'inclinaison (α) des zones de mélange (11), mesuré entre le rayon du corps de tube rotatif (2) partant de la zone de contact entre le corps de tube rotatif (2) et la zone de mélange (11) correspondante et le plan s'étendant dans la direction axiale à travers la zone de mélange (11) correspondante, est de l'ordre de 1 à 60°, de préférence de 20 à 55°, de préférence de 40 à 50°, plus particulièrement d'au moins 45°.

11. Tube rotatif selon l'une ou plusieurs des revendications précédentes, **caractérisé en ce que** le corps de tube rotatif (2) et l'élément de mélange (6) sont constitués au moins globalement d'un verre de quartz, le verre de quartz présentant une teneur en aluminium de 40 ppm maximum, de préférence de 20 ppm maximum.

12. Tube rotatif selon l'une ou plusieurs des revendications précédentes, **caractérisé en ce que** les portions axiales externes (8) présentent chacune une ouverture d'admission et/ou d'évacuation pour l'introduction, l'évacuation et le passage de gaz ainsi que pour le remplissage et la vidange du produit de chargement (4).

13. Four rotatif pour la fabrication de charbon actif à l'aide d'une sulfonation de carbonisation et d'activation dans un processus discontinu, comprenant un tube rotatif (1) selon les revendications 1 à 12.

14. Four rotatif selon la revendication 13, **caractérisé en ce que** le four rotatif comprend un dispositif de chauffage pour le chauffage direct et/ou indirect du tube rotatif (1).

15. Utilisation d'un tube rotatif selon les revendications 1 à 12, ou d'un four rotatif selon les revendications 13 ou 14 pour la fabrication de charbon actif à l'aide d'une sulfonation, d'une carbonisation et d'une activation dans un processus discontinu.
